# EUROPEAN PATENT APPLICATION

(11) **EP 4 749 493 A1**
(43) Date of publication of application: **27.05.2026**
(21) Application number: 25210626.5
(22) Date of filing: 23.10.2025
(51) Int. Cl.: G06F 21/57, H04L 9/32, H04L 67/104

(54) **PHYSICAL UNCLONABLE FUNCTION IDENTIFIABLE PEER TO PEER NETWORK AS A RELIABLE DATA SUPPLIER TO A BLOCKCHAIN**

(30) Priority: 25.10.2024 US 202463711892 P
(71) Applicant: Crossbar, Inc., Santa Clara, CA 95054 (US)
(72) Inventor: JO, Sung Hyun, Sunnyvale, CA, 94087 (US)
(74) Representative: Samson & Partner Patentanwälte mbB

(57) **Abstract**

A secure peer-to-peer network is implemented with computing devices over unsecure network connections. Each computing device can include or be coupled to a proof of origin hardware. The proof of origin hardware can be validated by publicly available data, such as a trusted server or by secure storage of valid proof of origin data, or other modality. Once validated on the peer-to-peer network, peer nodes can provide or can receive network services, such as blockchain services, off-chain data oracle services, smart contract-enabled services, distributed data oracle services, distributed network gateway services, among others.

## Description

### INCORPORATION BY REFERENCE

U.S. Patent Application No. 18/753,784 filed June 25, 2024 and titled "BACKUP AND RECOVERY SYSTEM AND METHODS FOR CRYPTOCURRENCY HARDWARE WALLET", U.S. Patent Application No. 18/406,899 filed January 08, 2024 and titled "CRYPTOCURRENCY HARDWARE WALLET ON MONOLITHIC CHIP WITH COMMON PHYSICAL COUNTERMEASURES AND SECURE MEMORY", U.S. Patent Application No. 18/218,948 filed July 06, 2023 and titled "SECURE MICROCONTROLLER WITH UNIFIED RRAM AND SUB-MODULE ADDRESSING AND ACCESS CONTROL", U.S. Patent Application No. 18/200,318 filed May 22, 2023 and titled "UTILIZING TWO-TERMINAL RESISTIVE SWITCHING MEMORY TO STORE VALIDATION DATA OF AN INTEGRATED CIRCUIT DEVICE", and U.S. Patent Application No. 17/708,491 filed March 30, 2022 titled "DYNAMIC HOST ALLOCATION OF PHYSICAL UNCLONABLE FEATURE OPERATION FOR RESISTIVE SWITCHING MEMORY" are hereby incorporated by reference herein in their respective entireties and for all purposes.

### TECHNICAL FIELD

The subject disclosure relates generally to improved utility and reliability for secure digital transactions, and as one illustrative example: a peer-to-peer network with peer nodes providing correct or verifiable data services for blockchain or cryptocurrency networks.

### BACKGROUND

Security in electronic communication is relevant at micro and macro scales, from operations of components within a single die to network communications of communicatively interconnected computing devices. Moreover, communication security is relevant at various scales in between the micro and macro levels, as well as for unconventional (or even heretofore unknown) inter-operations of electronic devices. Although variations exist, probably the most common application in the modern context for securing electronic communication is with cryptographic algorithms.

As a general characteristic, cryptographic algorithms tend to leverage highly complex computational schemes that make breaking the algorithm practically impossible, though in most cases not theoretically impossible. The greater the complexity of the cryptographic algorithm the more practical the difficulty in breaking it. For this statement to be true, however, certain mathematical assumptions that the algorithm relies upon must also hold true. One such assumption is the true randomness of a numbering scheme leveraged by an algorithm. Where systematic patterns exist within the numbering scheme or the mechanism utilized to generate (random) numbers, an algorithm is more vulnerable to being compromised. To this end, the national institute on standards and technology (NIST) maintains tests for randomness of number generators for use in cryptography applications (see, *e.g.,* A. Rukhin, et al., "A Statistical Test Suite for Random and Pseudorandom Number Generators for Cryptographic Applications", NIST, vol. 800-22, no. rev 1a, p. 131, 2010).

One potential vulnerability for secure communications is the memory utilized to store secure data. Hacking techniques can leverage knowledge about how a memory operates at a cell level or an array level, how a memory stores bits of data, physical effects of operations performed on the memory and so forth to infer information about secure data stored in the memory. Such knowledge rarely yields the secure data in and of itself. However, even where only minor correlation about some bits of the stored data can be correctly inferred, the theoretical or mathematical security of stored data can be undermined. This in turn can reduce the difficulty of compromising the secure data by brute force calculations or other conventional means.

Another potential vulnerability for secure communications is the authenticity of manufactured components of a communication device. Some hacking techniques attempt to substitute a trusted device or component with a compromised replacement. The compromised replacement may be positioned within a validation network, to improperly report a compromised device as valid, or within an edge device participating in a secure communication, within an intermediary device such as a network router, hub, or the like, or other link in a network. Where a security modality affecting a network communication involves a compromised device, the network communication can be undermined.

With the utility available through network computing, in personal and organizational communication, digital commerce, financial asset exchange and so on, the need to facilitate security for network computing will persist. In light of the above, the Assignee of the present disclosure continues to develop and pursue practical applications and integrated circuit devices to enhance the utility and security of network communications over public and private networks.

### SUMMARY

The following presents a simplified summary of the specification in order to provide a basic understanding of some aspects of the specification. This summary is not an extensive overview of the specification. It is intended to neither identify key or critical elements of the specification nor delineate the scope of any particular embodiments of the specification, or any scope of the claims. Its purpose is to present some concepts of the specification in a simplified form as a prelude to the more detailed description that is presented in this disclosure.

The present disclosure provides secure data to validate nodes in a computing network and mitigate or avoid spoofed entities on the network. Valid nodes can serve as trusted devices, and couple with (or embody) a node of a blockchain to communicate with a blockchain network. Node validation can be re-initiated when a computing device joins the network. This can extend to consumer edge devices, allowing non-dedicated or non-enterprise level hardware to operate as trusted devices and provide data services to blockchain networks. The data services can facilitate cryptocurrency transactions on the blockchain network, execution of digital contract conditions, acquisition or verification of information affecting a contract condition(s), among others.

In further embodiments, disclosed is a distributed application for providing data services to a blockchain network. The distributed application can be executed at (validated) nodes of a peer to peer (P2P) network that is connected to the blockchain network. Resources of the nodes can be expanded or contracted in a distributed fashion to meet dynamic demand for application services. When demand for data services increases, a number of nodes, processing capacity of nodes, memory capacity of nodes, communication resources of nodes, *etc.*, can be increased within the P2P network by the distributed application to serve the increased data service demand. Conversely, as demand for data services decreases the number of nodes, processing resources, memory resources, communication resources, *etc.*, allocated to meeting the demand for data services can likewise be decreased. These data services can be data serving any suitable blockchain network function, such as cryptocurrency price(s) in other cryptocurrencies, price(s) in national or regional currency, survey data of a group of people (*e.g*., device users connected to the blockchain), a contract condition(s), status of a contract condition(s), and so forth.

In further embodiments, disclosed is a distributed gateway for a P2P network. The distributed gateway can include an application executed at multiple (validated) nodes of the P2P network that can allocate or deallocate network resources of P2P nodes to meet dynamic network communication demand (*e.g*., requests for off-chain data, among others). When demand for data services at the P2P network from the blockchain increases, the distributed gateway application can allocate additional nodes to serve gateway functions, such as routing blockchain data requests, responding to traffic requests, increasing bandwidth for the blockchain, opening parallel communication tunnels, closing communication tunnels and the like. As communication demand to the P2P network decreases, gateway resources can be deallocated by the gateway application. In some embodiments, the distributed gateway and distributed data service can be incorporated in a common distributed application.

In an embodiment(s), the present disclosure provides an electronic device. The electronic device can comprise a communication interface facilitating communication by way of a network with a remote device and a second communication interface facilitating communication with a nearby electronic device. Moreover, the electronic device can comprise an integrated circuit (IC) device comprising proof of origin (PoO) data unique or substantially unique to the IC device, that is communicatively coupled to the electronic device over the second communication interface and can comprise a processor for executing instructions for trusted access to and communication with a peer-to-peer (P2P) network and providing trusted data services to a blockchain network connected to the P2P network. Still further, the electronic device can comprise instructions stored in a storage medium or embodied in logic hardware, or a suitable combination thereof. The instructions can comprise: initiate communication with the remote device utilizing the communication interface; send the PoO data to the remote device; receive a validation response from the remote device validating the electronic device on the P2P network; connect to a blockchain network and execute a data service application from the P2P network that provides a data service for the blockchain network.

In further aspects of the disclosed embodiments, the present disclosure provides a computing network. The computing network can comprise a first computing device having: a first network communication interface; a first IC device comprising first PoO data unique or substantially unique to the first IC device; a memory storing instructions of a blockchain oracle-service application; and a processor for executing the instructions stored in the memory. Moreover, the computing network can comprise a second computing device, having a second network communication interface connected directly or indirectly to the first network communication interface of the first computing device forming a peer-to-peer (P2P) network, and a second IC device comprising second PoO data unique or substantially unique to the second IC device. The computing network can additionally comprise a gateway coupled to a node of a blockchain network and serving as an interconnection between the P2P network and the blockchain network. In one or more aspects of the disclosed embodiments: the first computing device is configured to receive and validate the second PoO data to validate the second computing device, and the second computing device is configured to receive and validate the first PoO data to validate the first computing device. In still further aspects of the disclosed embodiments, the first computing device executes the blockchain oracle-service application providing off-chain data, which is external to the blockchain, to the node of the blockchain network in response to a query for the off-chain data from the node of the blockchain network.

The following description and the drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Various aspects or features of this disclosure are described with reference to the drawings, wherein like reference numerals are used to refer to like elements throughout. In this specification, numerous specific details are set forth in order to provide a thorough understanding of this disclosure. It should be understood, however, that certain aspects of the subject disclosure may be practiced without these specific details, or with other methods, components, materials, *etc.* In other instances, well-known structures and devices are shown in block diagram form to facilitate describing the subject disclosure.
Figure 1 illustrates a block diagram of an example integrated circuit (IC) device formed on a monolithic semiconductor die according to aspects of the disclosed embodiments;
Figure 2 depicts a diagram of an example device validation for a blockchain network in an aspect of the disclosed embodiments;
Figure 3 illustrates a block diagram of an example IC device with root of trust data configured for export from the IC device, in another aspect of the disclosed embodiments;
Figure 4 depicts a diagram of an example secure peer-to-peer (P2P) network incorporating the IC device of Figure 3, in further aspects of the present disclosure;
Figure 5 illustrates a secure P2P network communicatively coupled with a blockchain network with integrated and peer application support, in further disclosed aspects;
Figure 6 illustrates a block diagram of a hardware identifier and application processing device on a monolithic chip, in yet additional aspects of the disclosed embodiments;
Figure 7 depicts an example peer-sourced off-chain data service for a blockchain from a secure P2P network according to still further aspects of the disclosed embodiments;
Figure 8 illustrates a diagram of an example P2P network providing distributed application services and optionally distributed gateway services for a blockchain;
Figure 9 illustrates a flowchart of an example method for providing off-chain data services to a blockchain from a secure P2P network in additional aspects of the disclosure;
Figure 10 depicts a flowchart of an example method for providing off-chain data services to a blockchain from a secure P2P network in another disclosed aspect(s);
Figure 11 depicts a flowchart of a sample method for providing distributed application services from a P2P network with optional distributed gateway in another aspect(s);
Figure 12 illustrates a block diagram of an example electronic operating environment in accordance with one or more disclosed embodiments;
Figure 13 depicts a block diagram of an example computing environment for implementing one or more embodiments of the present disclosure.

### DETAILED DESCRIPTION

### INTRODUCTION

Blockchain networks provide substantial utility in digital commerce, including the rapid and efficient exchange of cryptocurrency assets. Yet as more monetary, commercial and investment value transfers into digital assets and more commerce is conducted through cryptocurrency exchange, the incentive for hackers and malicious actors to steal, undermine or otherwise interfere with security of cryptocurrency assets and exchange will increase. One mechanism of undermining digital commerce is identity spoofing. Because digital commerce generally relies on data to identify different parties on a network, identity spoofing can be accomplished as simply as passing fake identity data on the network.

Many types of identity data are utilized to differentiate devices, people using such devices or entities (*e.g.*, sub-networks, enterprise devices, organizations or businesses, *etc.*) on a network(s). Examples of identity data can include: an Internet Protocol (IP) address, a media access control (MAC) address, a subscriber identity module (SIM) number, an integrated circuit card identification (ICCID), an international mobile subscriber identity (IMSI) number, an international article number (IAN), a personal identification number (PIN), among others. By generating fake identity data and passing the fake identity data off as an independent entity or entities, a malicious actor can pass off fake data as an entity on the network. Because data can be replicated almost without limit, a number of spoofed entities can be practically unlimited once a successful data spoofing technique is discovered. This undermines the security and reliability of the network. Aspects of the subject disclosure provide a secure integrated circuit device configured to export root of trust data (or data derived from the root of trust data) unique or substantially unique to the integrated circuit device. This enables the root of trust data to be utilized to identify the integrated circuit device (or an associated computing device) on the network. Because the root of trust data can be very difficult to spoof, reliability of network entities can be greatly improved when validated by the root of trust data.

More generally, threats to security and validity of electronic devices by way of hacking and illicit access are widespread. Mechanisms to secure and authenticate an electronic device and inter-device network communication - particularly over unsecure networks - include cryptography, virtual private networking, combinations of these and others. In the event that electronic devices engaged in network communication are properly authenticated, the communication channel between the devices may still be vulnerable. This is often addressed by encrypting data before transmitting important communications onto a network. Virtual private networks (VPNs) can utilize a tunneling protocol, which can include encryption, between an electronic device and a communication network, between two networks, and so forth. But hacking efforts continue along with advancements in security, and seek to identify and exploit weaknesses in electronic devices and electronic communications. Need for a robust and comprehensive resistance to hacking has been one factor slowing the development of applications pertaining to value exchange over unsecure networks, like the Internet.

As a particular example, illicit access to an electronic device involved in a network communication can be utilized to compromise the communication and even other devices involved in the communication. To illustrate, illicit modification or substitution of a component of an electronic device (*e.g.*, a nonvolatile memory, a firmware, an encryption key, *etc.*), can effectively compromise the electronic device itself. Moreover, fabrication techniques utilized to create a chip, while cost effective and efficient, can leave inherent vulnerabilities in the chip itself. As another illustration, internal device packaging that facilitates communication between fabricated components that constitute an electronic device (*e.g*., inter-chip bonding that also facilitates inter-chip communication, or printed circuit board communication lines connecting chips, *etc.*) can be vulnerable to illicit direct physical access that compromises communication within a device itself. Similarly, physical access to a chip can be leveraged to retrieve secret security data used to encrypt communications, thereby compromising those communications. Also, network communications can potentially be compromised by accessing components of a network, sub-components thereof, or the data transmitted therein. Several core deficiencies in electronic devices and electronic communication are often exploited to compromise security in digital transactions.

Embodiments of the present disclosure include an electronic device constructed to be resistant to illicit physical access. In some examples, the electronic device can be constructed to include a secure element that has a physical countermeasure (PCM) shield and is resistant to hacking. Secret data - such as proof of origin data, root of trust data, data derivative of the root of trust data (*e.g*., hashed root of trust data, and so on), a cryptocurrency key, secret user data, sensitive data, and so on - can be stored in a memory embedded within the secure element and protected by the PCM shield. Secret data can be generated at least in part from a PUF or a TRNG algorithm implemented on memory embedded within such an electronic device (*e.g*., resistive switching memory, MOS transistor memory, SRAM memory, and others). Such data can be unique or substantially unique to the embedded memory (and to the electronic device). Inclusion of a secure element can deter some hacking and illicit access attempts, but others can still be effective if communication pathways between the secure element and a processor, device controller, memory structure utilized by the processor, and so on, are not protected by the PCM shield. This can occur, for instance, in bonded chip devices in which the secure element is formed on one chip that is bonded to a second chip containing the processor or device controller and memory utilized by the processor/controller. If a controller or processing device accessing the secure element is unprotected by the PCM shield, both the controller and communication link between the controller and secure element (e.g., the inter-chip bonding) become points of vulnerability.

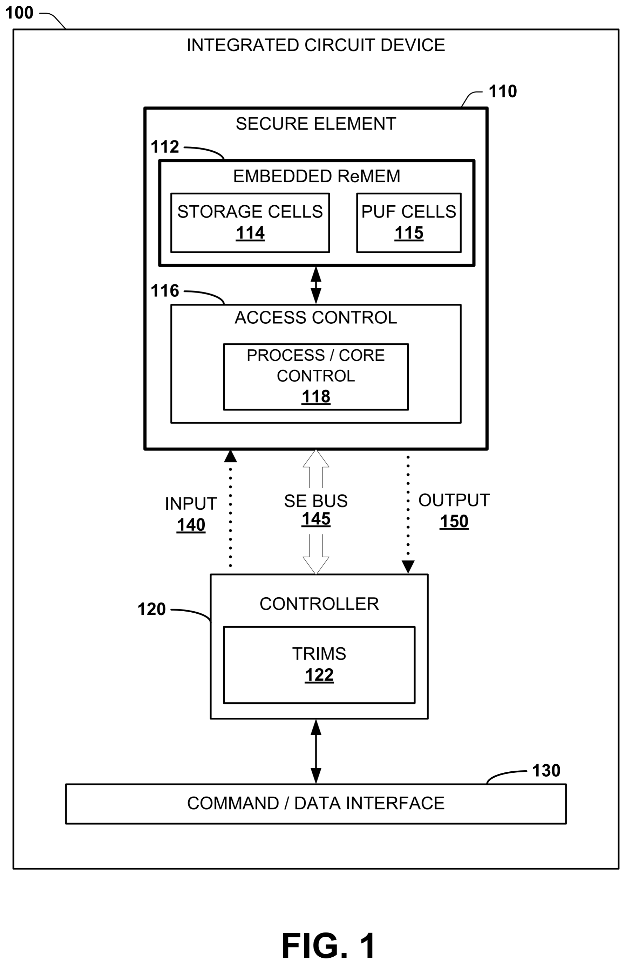

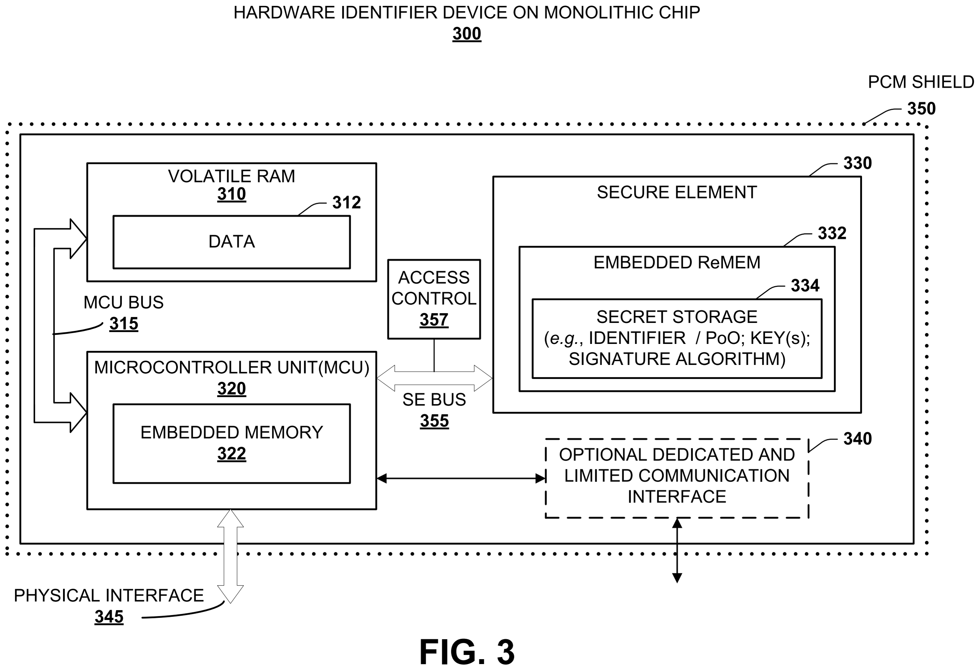

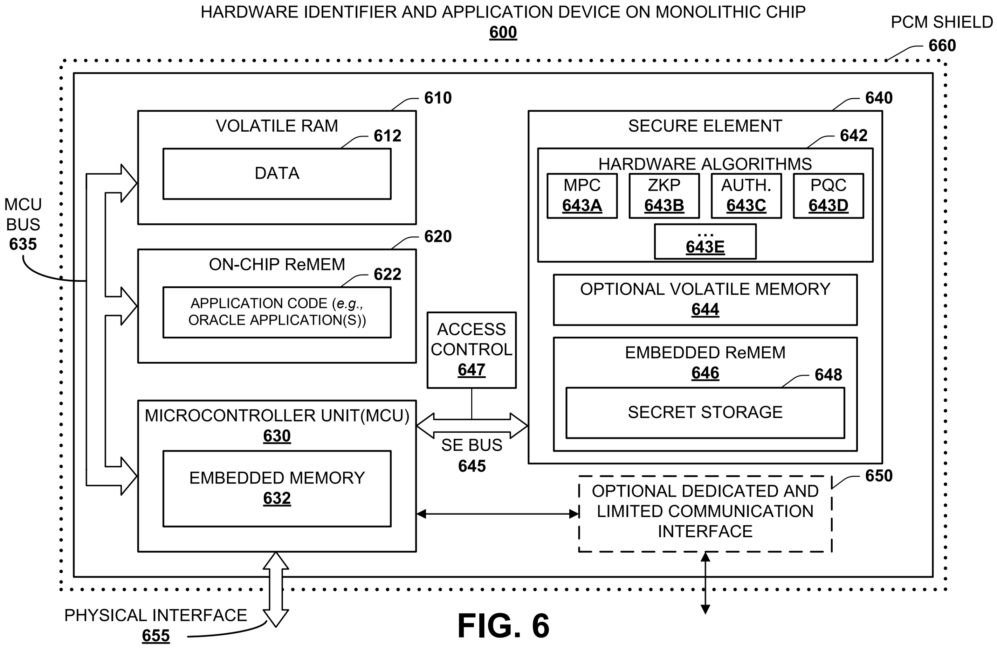

In addition to electronic device structural vulnerabilities, many secure element devices suffer from archaic single-key security architectures and do not have the computational capacity or memory to take advantage of sophisticated architectures such as multi-party computation (MPC). Single-key security also imposes a threat of data or asset loss (*e.g.*, digital asset(s)) through loss of a single security key, or loss of a single electronic device storing the security key. Embodiments of the present disclosure can leverage a sophisticated MPC encryption and decryption framework that stores security data in embedded resistive memory having robust resistance to illicit physical access. In the context of network interactions, highly secure proof of origin data available at respective network nodes can be utilized for decentralized and distributed authentication of nodes in a network. The proof of origin data can be stored on monolithic integrated circuit (IC) devices having robust PCM shields (*e.g*., see Figures 3 and 6, *infra*). In some embodiments, the proof of origin data can be authenticated at a trusted server device of a manufacturer of the monolithic IC device(s) (*e.g*., see U.S. Patent Application No. 18/200,318 filed May 22, 2023 and titled "UTILIZING TWO-TERMINAL RESISTIVE SWITCHING MEMORY TO STORE VALIDATION DATA OF AN INTEGRATED CIRCUIT DEVICE", incorporated by reference hereinabove). In other embodiments, the proof of origin data can be authenticated by network nodes against trusted proof of origin data stored at secure memory of the network nodes. In still other embodiments, the proof of origin data can be generated from a physical unclonable function (PUF) implemented with resistive switching memory embedded within the monolithic IC device(s) in response to a request for proof of origin data issued by a network node(s) (*e.g*., see Figure 1, below, as well as U.S. Patent Application No. 17/708,491 filed March 30, 2022 and titled "DYNAMIC HOST ALLOCATION OF PHYSICAL UNCLONABLE FEATURE OPERATION FOR RESISTIVE SWITCHING MEMORY", incorporated by reference hereinabove).

Disclosed embodiments include a secure IC device in a single monolithic chip structure storing proof of origin data that can be utilized to validate a computing device coupled with the secure IC device. The computing device can operate on an unsecured network and provide the proof of origin data to validate the computing device as a trusted node on the unsecured network. In at least one non-limiting aspect of the disclosed embodiments, validation of the proof of origin data can be implemented at a trusted server device maintained by a manufacturer of the IC device, though other modalities for validating unique or substantially unique proof of origin data are within the scope of the present disclosure. In some embodiments, the proof of origin data can be utilized to secure communications involving the computing device on the unsecured network. The proof of origin data can be utilized to generate security data (*e.g.*, a public-private key pair, or other suitable cryptographic architecture) that can encrypt and decrypt the secure communications of the computing device, as one example among others. In some aspects of the disclosure, the proof of origin data can be utilized at least in part by the computing device in generating a MPC key share of a set of MPC cryptographic key shares in conjunction with one or more other computing devices connected to the unsecured network. The MPC key share(s) can be utilized to encrypt or decrypt communications on the unsecured network in such aspects.

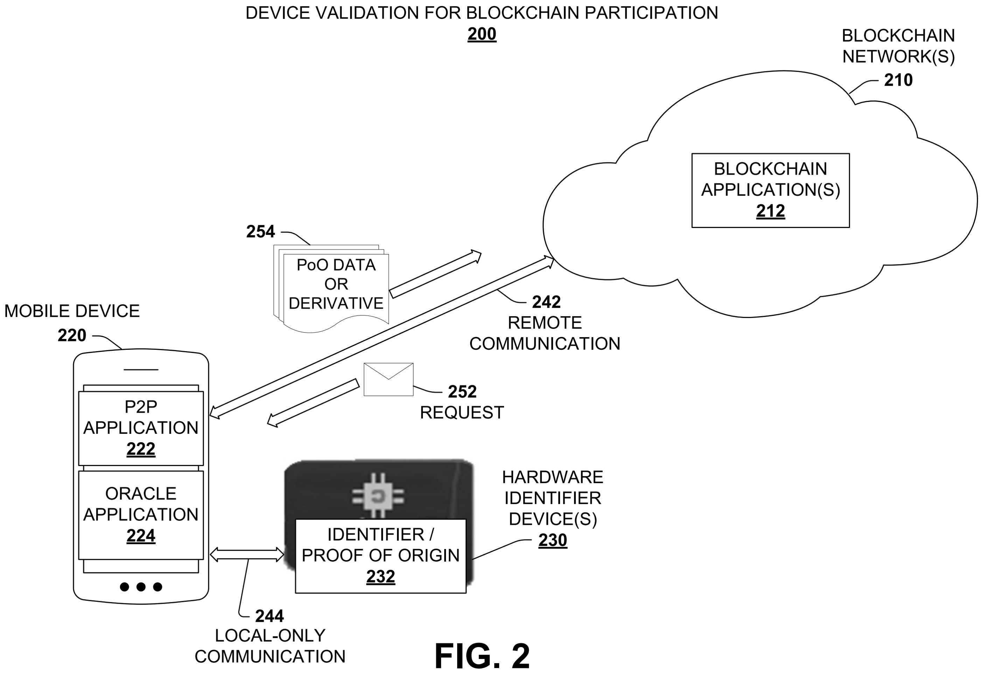

In some disclosed embodiments, a disclosed IC device can include hardware logic to accelerate cryptographic algorithm computations, such as generating secret data, generating MPC security data, participating in encryption and decryption of data with a MPC key share(s), providing blockchain services for client nodes on a peer to peer network, such as cryptocurrency wallet applications, digital asset transaction applications, smart contract applications, and the like (*e.g.*, Figure 6, *infra*). In aspects of such embodiments, the hardware logic can include atomic logic sequences that can be organized in different sequences and combinations to achieve a variety of algorithmic computations. These atomic logic sequences can significantly increase the range and scope of algorithms the IC device can compute while minimizing chip area consumed by the hardware acceleration logic circuitry (*e.g*., see U.S. Patent Application No. 18/406,899 at Figures 2-4, incorporated by reference herein above).

As utilized herein, the term "substantially" and other relative terms or terms of degree (*e.g*., about, approximately, roughly, and so forth) are intended to have the meaning specified explicitly in conjunction with their use herein, or a meaning which can be reasonably inferred by one of ordinary skill in the art, or a reasonable variation of a specified quality(ies) or quantity(ies) that would be understood by one of ordinary skill in the art by reference to this entire specification (including the knowledge of one of ordinary skill in the art as well as material incorporated by reference herein). As an example, a term of degree could refer to reasonable manufacturing tolerances about which a specified quality or quantity could be realized with fabrication equipment. Thus, as a specific illustration, though non-limiting, for an element of a resistive switching device expressly identified as having a dimension of about 50 angstroms (A), the relative term "about" can mean reasonable variances about 50 A that one of ordinary skill in the art would anticipate the specified dimension of the element could be realized with commercial fabrication equipment, industrial fabrication equipment, laboratory fabrication equipment, or the like, and is not limited to a mathematically precise quantity (or quality). In other examples, a term of degree could mean a variance of +/- 0-3%, +/- 0-5%, or +/- 0-10% of an expressly stated value, where suitable to one of ordinary skill in the art to achieve a stated function or feature of an element disclosed herein. In still other examples, a term of degree could mean any suitable variance in quality(ies) or quantity(ies) that would be suitable to accomplish an explicitly disclosed function(s) or feature(s) of a disclosed element. Accordingly, the subject specification is by no means limited only to specific qualities and quantities disclosed herein, but includes all suitable variations of a specified quality(ies) or quantity(ies) reasonably conveyed to one of ordinary skill in the art by way of the context disclosed herein.

### OVERVIEW

Figure 1 illustrates a block diagram of an example integrated circuit (IC) device 100 for an electronic device (*e.g.*, a secure computing device, a secure element, a digital hardware wallet on monolithic chip, and so forth) according to one or more embodiments of the present disclosure. IC device 100 includes a secure element 110 comprising an array(s) 112 of embedded resistive memory (ReMEM). ReMEM can include, for example, two-terminal resistive-switching memory cells, though other magnetic switching or charge-trapping two-terminal memory cells or even three-terminal memory cells can be utilized instead or in addition, in some disclosed embodiments. For instance, array 112 of ReMEM can include, as non-limiting examples, a magnetic switching memory (*e.g*., spin torque transfer magnetic memory, among others), a phase change resistive switching memory, an oxygen vacancy resistive switching memory, a conductive bridge switching memory, a metal oxide resistive switching memory, a sub-oxide resistive switching memory, a chalcogenide memory, a carbon nanotube memory, an organic memory, and resistive filamentary switching memory, among others known in the art or reasonably conveyed to one of ordinary skill in the art by way of the context provided herein.

Array(s) 112 of embedded ReMEM 112 can include resistive switching memory cells, and different portions of the resistive switching memory cells can be characterized for different memory or data generation functions. Example functions of resistive switching memory cells of array(s) 112 can include physical unclonable function (PUF) data generation, memory storage or true random number generation (TRNG) data generation. Memory storage functions can include one-time programmable (OTP) data storage and many-time programmable (MTP) data storage (also referred to as rewritable or program/erase) and are shown collectively as storage cells 114. Memory cells utilized to generate or store PUF data or TRNG data are shown collectively as PUF cells 115. In one or more embodiments, multiple memory cells can be aggregated to define a differential PUF bit (or a differential TRNG bit), or a single cell can define a PUF bit (or TRNG bit) in other embodiments. These modalities are also embodied within PUF cells 115. Array(s) 112 of embedded ReMEM can be characterized for other types of memory cell functions not specifically depicted in Figure 1, where suitable.

As shown, array(s) 112 can be a unified memory structure, whereas in other embodiments, a different array (having a distinct access control 116) can define separate memory cells. In yet another embodiment, each of storage cells 114 and PUF cells 115 can be embodied in distinct resistive switching arrays having respective access controls 116. More generally, one or more of: storage cells 114 and PUF cells 115 can be separate memory structures from array(s) 112 of embedded ReMEM. For example, OTP cells can be located externally to array(s) 112 on a different portion (not shown) of a monolithic semiconductor chip. Alternatively, in other embodiments, other storage cells 114 (or PUF cells 116) can be at least in part included within array(s) 112 of memory. For instance, storage cells 114 can be embodied as an array among a set of arrays that form array(s) 112 of embedded ReMEM, a block of memory within such an array(s) 112, a set of pages within one or more blocks or arrays, or other suitable arrangement.

Access control 116 can be configured to selectively permit or limit access to array(s) 112 or portions of array(s) 112, based on stored conditions. In an embodiment, access control 116 can be implemented in conjunction with a secure element bus (SE bus) 145 providing electronic communication with secure element 110 (*e.g.*, SE bus 355 of Figure 3 or SE bus 645 of Figure 6, *infra*). Different buses can have different access control logic or stored conditions in various embodiments. For instance, access control 116 associated with an array(s) 112 of a disclosed secure element can have a core/process control 118 configured to limit a processor, a core of a processor, a process or thread running on a processor, or the like, which can access the array(s) 112 of embedded ReMEM associated with secure element 110, or which can access portions of the array(s) 112 (*e.g*., discriminating between access to storage cells 114 and access to PUF cells 115). In contrast, another access control 116 (not depicted) associated with a bus facilitating electronic communication with an array(s) 112 for storing application code, or with a volatile memory for maintaining operating data of an application in execution, can have few or no core/process control 118 access restrictions for the processor(s), core(s), processes or process threads implemented within a monolithic semiconductor chip such as IC device 100 (*e.g.*, see MCU bus 315 of Figure 3, or MCU bus 635 of Figure 6, *infra*). Access control 116 can also enforce access limitations to array(s) 112 for external commands or data received at a command / data interface 130 (see below).

Controller 120 is provided to perform operations on array(s) 112 of embedded ReMEM. Suitable operations can include memory operations, such as reading data from, writing data to, overwriting data at, and so on, subsets of array(s) 112. Memory operations can include processes such as program (write), read, overwrite, erase, and so forth, suitable for operation of storage cells 114 (including, *e.g*., operations suitable for many-time programmable cells and operations suitable for one-time programmable cells). Still further, memory operations can include processes for generating PUF data or TRNG data on individual PUF cells 115, or on a group(s) of PUF cells 115 defining a differential PUF bit. Instructions for implementing memory operations according to the various characterizations can be stored in trim instructions 122. Memory cell operations can be implemented in response to a command from an external device (by way of command/data interface 130, for example), which can be implemented by a manufacturer post-fabrication of integrated circuit device 100, by a distributor or reseller of integrated circuit device 100 after fabrication, by an end-user as part of a chip calibration routine, or as a dynamic process during operation of integrated circuit device 100, according to various embodiments.

As an illustrative example, a host device communicatively coupled to integrated circuit device 100 can issue a host command to generate PUF data (or TRNG data). In at least some disclosed embodiments, a host command to generate PUF data can be part of a distributed MPC data generation algorithm, where an MPC key, one or more shares of the MPC key or a suitable combination of the foregoing are generated at PUF cells 115 with a PUF data generation operation. In another example, a remote device communicatively connected to (directly or indirectly) integrated circuit device 100 by a network(s) (*e.g*., by way of a command/data interface 130; see below) can issue a request for proof of origin (PoO) data unique or substantially unique to integrated circuit device 100 (or a computing device connected to or communicatively coupled with integrated circuit device 100; see mobile device 220 and hardware identifier device(s) 230 of Figure 2, *infra*). In response to the remote command, controller 120 can access PUF cells 115 and retrieve the PoO data unique to integrated circuit device 100 and respond to the remote command with the PoO data. In various embodiments, trim instructions 122 can store protocols to implement memory operations for storage cells 114 and PUF cells 115 consistent with these and other example operations.

Also illustrated in integrated circuit device 100 is an input(s) 140 and output(s) 150. In some embodiments, input(s) 140 can include (or provide a pathway for) data to be stored within array(s) 112 of embedded ReMEM, such as storage cells 114 or PUF cells 115. Output(s) 150 can output data stored within resistive memory devices of array(s) 112. In some embodiments, output(s) 150 can output data that results from computations utilizing data stored in ReMEM cells.

A command/data interface 130 is provided to receive memory commands from an external device and respond to those commands. Further, data to be written to array(s) 112 can be received by way of command/data interface 130, and data output from array(s) 112 can be provided over command/data interface 130. Command/data interface 130 can include a direct physical communication bus or port in some embodiments, a short range wireless interconnect in further embodiments (*e.g.*, see local-only communication 244 of Figure 2, *infra*), a limited and direct communication over a wide area network in other embodiments (*e.g*., a connection limited to accessing a predetermined IP address (or set of addresses) of a trusted server device, such as a backup key recovery device, and so forth), or a general wide area network connection in still other embodiments (*e.g*., an internet connection).

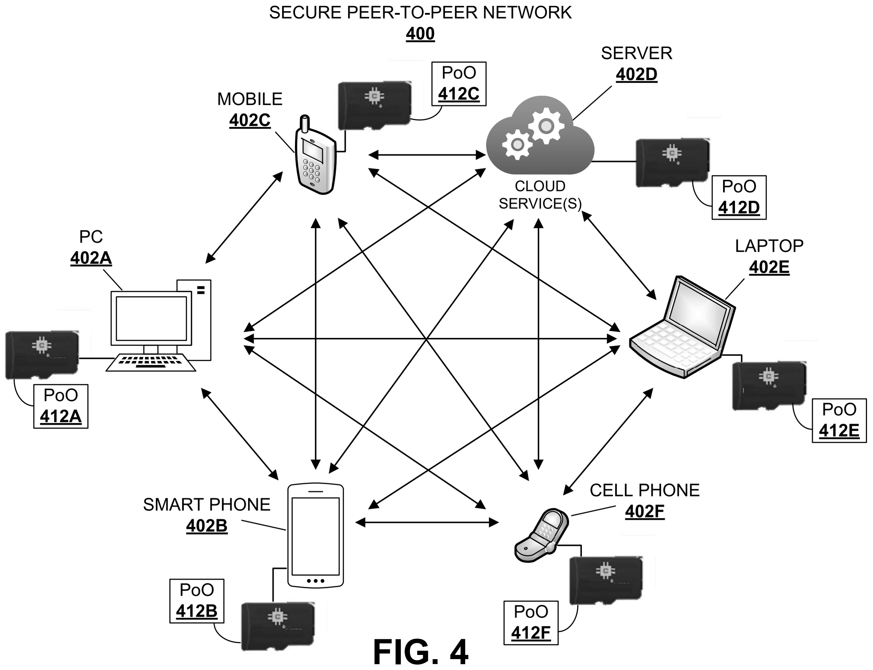

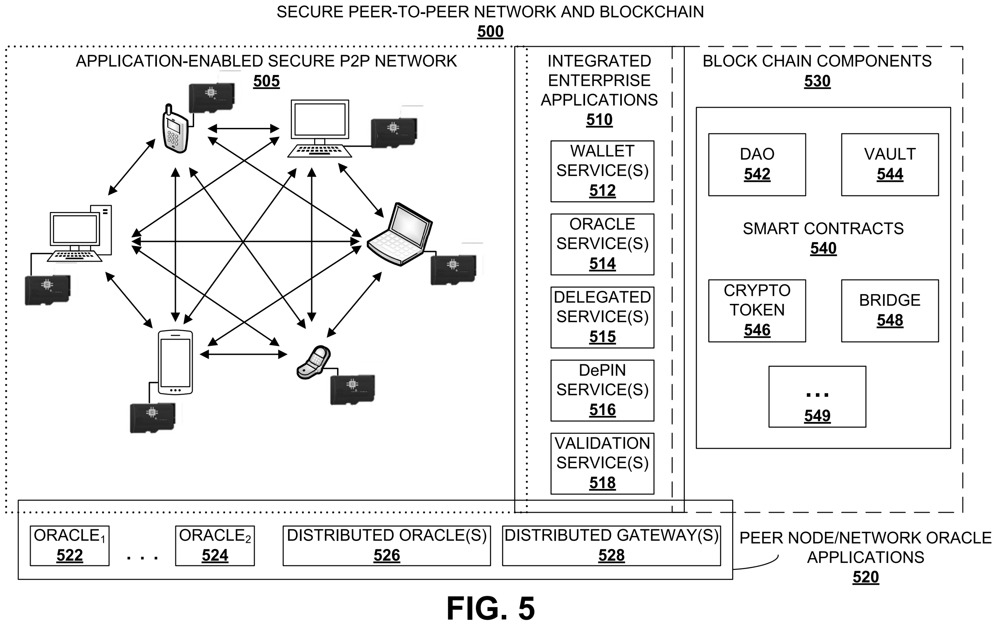

Figure 2 illustrates a diagram of an example communication environment 200 that facilitates validation of peer nodes in a peer-to-peer network environment, according to various embodiments of the present disclosure. In some embodiments, communication environment 200 can also facilitate secure communications over a remote communication 242, even where remote communication 242 includes an unsecure network. Communication environment 200 can even facilitate secure communications for unsecure edge devices (*e.g*., peer nodes, network gateway devices, consumer edge devices, and so on), mitigating or avoiding a need to limit participation in communication environment 200 only to trusted edge devices. For instance, communication environment 200 can facilitate device validation and secure communication for a wide area peer-to-peer (P2P) interconnection among untrusted devices utilizing an unsecure network(s), such as the Internet, a public network(s), an unsecure private network(s), and the like (see also, *e.g.*, Figures 4 and 5, *infra*). This can facilitate trusted interaction between non-dedicated peer nodes, allowing non-dedicated peer nodes to provide application services to other peer nodes. This can even be implemented for high-value applications such as cryptocurrency transactions on a blockchain(s), digital wallet services, digital asset services on the blockchain(s), execution of smart contracts in conjunction with a blockchain(s), and so on.

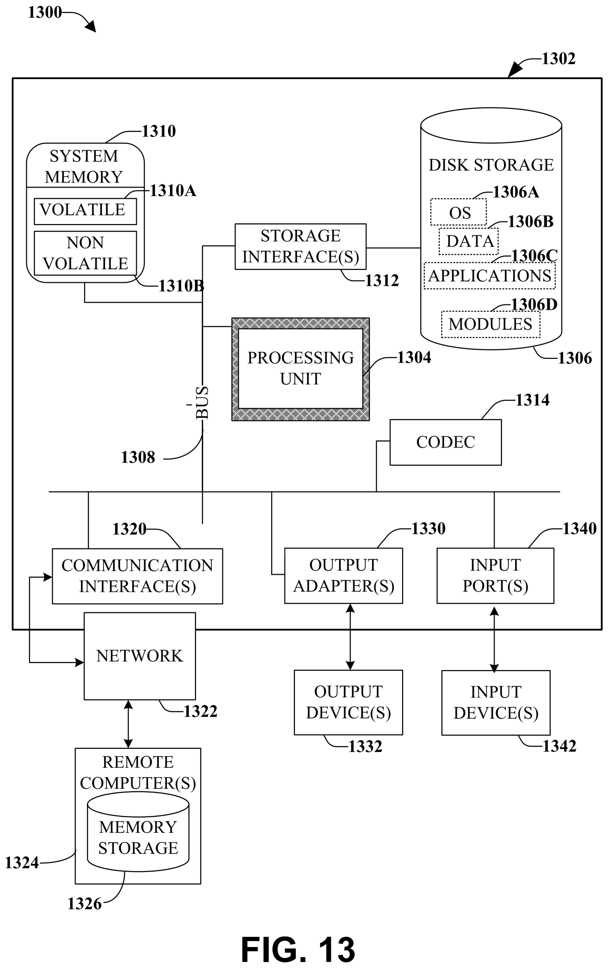

Remote communication 242 can be embodied by any suitable network(s) connection, including a public network, a private network, a peer-to-peer (P2P) network, or other suitable network, or a suitable combination of the foregoing. Remote communication 242 can include wired or wireless connectivity to a local area network (LAN) or larger networks, *e.g*., a wide area network (WAN) which may connect to (or embody multiple connections to) a global communications network, such as the Internet. As examples, remote communication 242 can include a suitable public, private or commercial cellular voice or data network(s) (*e.g*., second generation (2G), third generation (3G), fourth generation (4G), 4G long term evolution (LTE), fifth generation (5G), and other iterations of cellular networks), a microwave communication network(s) (*e.g*., WiMAX), optical laser communication network(s), a satellite voice or data network(s), Bluetooth^{®} or other near field communication (NFC) wireless network(s), a Wi-Fi technology network(s) such as IEEE 802.11a, b, g, n, and others, an infrared communication network(s), or others, or various combinations of the foregoing. Remote communication 242 can alternatively, or in addition include wired network connections, including a wired network connection(s) to a global communications network such as the Internet. Examples can include an Ethernet connection(s) (*e.g.*, Cat 3, Cat 5, Cat 5e, Cat 6, Cat 6A, *etc.*), coaxial cable connection(s), digital subscriber line connection(s), fiber optic cable connection(s), or other wired networks, or suitable combinations of the foregoing. Still further, various combinations of wired and wireless networks can be incorporated within remote communication 242 (see also, *e.g.*, Figure 13, *infra*).

Communication environment 200 depicts a mobile device 220 communicatively connected to a blockchain network(s) 210 by way of remote communication 242. Mobile device 220 can be a standalone device, in an embodiment, or can be a node of a second network at least in part distinct from blockchain network(s) 210. For instance, the second network can be a P2P network(s), a local area network, a wide area network, a private network, a public network, another blockchain network(s), or the like, or suitable combinations of the foregoing. Blockchain network (s) 210 can be a decentralized interconnection of processing devices executing a blockchain application 212 (*e.g.*, a Bitcoin blockchain application, an Ethereum^{®} blockchain application, *etc.*) and communicatively coupled by one or more networks, such as the Internet, other public networks, private networks, and combinations thereof. Blockchain network(s) 210 can also include one or more cloud devices, server devices, including various enterprise hardware, as well as consumer processing devices, or edge devices.

Mobile device 220 can be communicatively connected to a hardware identifier device(s) 230 by way of a local-only communication 244. Local-only communication 244 can be a physical connection, or a wireless connection, or a suitable combination of short range physical and wireless connections. The physical connection(s) can be of any suitable form factor, such as a removable media device (*e.g.*, a USB removable media, a memory card removable media, such as CompactFlash, Memory Stick, Secure Digital (SD), among others, and various iterations such as mini-SD, micro-SD, *etc.*), a peripheral device connection (*e.g.*, a USB peripheral connection, a serial connection, a parallel connection), and so forth. The wireless connection can be a local area network (LAN) such as a WiFi connection, or can be a personal area network, a NFC connection, a Bluetooth connection, and others.

Hardware identifier device(s) 230 can contain identifier data (more generally referred to herein as proof of origin (PoO) data 232) that is unique or substantially unique to hardware identifier device(s) 230. Substantially unique data can include data having a high statistical probability of being unique, without foreclosing a mathematical possibility of replication. Large data sequences can serve as suitable PoO data 232 unique to hardware identifier device(s) 230, even if such a data sequence is replicable in theory (or in practice). In some embodiments (and applicable to other uses of the term herein), PoO data 232 can be root of trust data unique (or substantially unique) to hardware identifier device(s) 230, data derived from the root of trust data (*e.g.*, a hash of the root of trust data, *etc.*), PUF data (*e.g.*, generated within hardware identifier device(s) 230), TRNG data (*e.g*., generated within hardware identifier device(s) 230), a large data sequence, a suitable cryptographic sequence, a MPC key share of a MPC key, or the like, or a suitable combination of the foregoing.

As utilized herein, PoO data 232 can be utilized at least in part by blockchain nodes of blockchain network(s) 210 to validate hardware identifier device(s) 230 (and optionally mobile device 220, *e.g.*, by proxy). Accordingly, hardware identifier device(s) 230 can serve as a verifiable and trusted hardware device (*e.g.*, a hardware blockchain device, a hardware cryptocurrency wallet device, a hardware digital currency or digital asset device, and so on), obviating a need for mobile device 220 itself to be a trusted device. In one or more embodiments, hardware identifier device(s) 230 can include embedded ReMEM. The embedded ReMEM can be leveraged to generate PUF data or TRNG data, unique or substantially unique to the embedded ReMEM of hardware identifier device(s) 230, to serve as the PoO data 232. This PUF / PoO data 232, being (substantially) unique to the embedded ReMEM of hardware identifier device(s) 230, can establish proof of possession of hardware identifier device(s) 230 and proof of origin for communications secured with the proof of origin data 232. PoO data 232 can therefore confirm that mobile device 220 is not a spoofed entity, but rather represents real computing hardware connected to blockchain network(s) 210. In alternative or additional embodiments of the present disclosure, hardware identifier device(s) 230 can include embedded metal oxide semiconductor (MOS) transistors that can be leveraged to generated PUF data or TRNG data that is unique or substantially unique to the embedded MOS transistors and to the hardware identifier device(s) 230. PUF data or TRNG data generated from embedded MOS transistors can serve as the PoO data 232, in such embodiments. In still other embodiments, hardware identifier device(s) 230 can include embedded static random access memory (SRAM) that can be leveraged to generate PUF data or TRNG data that is unique or substantially unique to the embedded SRAM and hardware identifier device(s) 230, which could be utilized for PoO data 232 in at least some such embodiments.

In further embodiments, mobile device 220 (or hardware identifier device(s) 230) can operate in conjunction with blockchain network(s) 210 to generate MPC security data for securing communications between such devices over remote communication 242. As an example, a MPC algorithm can be employed by mobile device 220 (or hardware identifier device(s) 230) in conjunction with a node(s) of blockchain network(s) 210 (and optionally one or more alternative or additional devices - not depicted, but see peer nodes of P2P networks at Figures 4 and 5, *infra*) to generate respective security data shares. The security data shares can then be utilized to encrypt and decrypt data at respective edge devices (*e.g*., mobile device 220, nodes of blockchain network(s) 210, nodes of a P2P network, and so forth) with a MPC encryption algorithm. This can facilitate node-to-node encryption over remote communication 242. PoO data 232 therefore enables blockchain network(s) 210 to validate hardware identifier device(s) 230 as a trusted device, and participate with mobile device 220 even in application level communications that could otherwise compromise nodes of blockchain network(s) 210. As a result, high-level applications such as client-server interactions can be implemented seamlessly between blockchain network(s) 210 and mobile device 220. Mobile device 220 can be a client of a node of blockchain network(s) 210 in a first client-server interaction, whereas the node of blockchain network(s) 210 can be a client of mobile device 220 in a second client-server interaction. Mobile device 220 can serve a separate client node of a P2P network in a third client-server interaction, including providing a blockchain application service for the client node in conjunction with blockchain network(s) 210. Described differently, communication environment 200 can facilitate a seamless interaction and collaboration of node devices over unsecured networks with peer node devices, blockchain node devices, and combinations thereof interchangeably serving as client devices, server devices, or both. This can maximize the efficiency and effectiveness of decentralized hardware in network communication in providing application services among the decentralized hardware devices.

As an illustrative example, blockchain network(s) 210 can include application programming embodying a blockchain application 212. Blockchain application 212 can enable nodes of blockchain network(s) 210 to operate as server devices providing blockchain transactions, smart-contract services, and the like, over remote communication 242. Mobile device 220 can include a P2P application 222 enabling mobile device 220 to operate as a server node in a P2P network (*e.g.*, see Figure 4, *infra*) that provides application services to client nodes of the P2P network. Mobile device 220 can also include an off-chain data service application 224 (also referred to herein as an oracle application or an oracle-service application) configured to cause mobile device 220 to operate as a server node (or a node in a set of nodes functioning as a distributed server) that provides data external to blockchain network(s) 210 to the nodes thereof. Example off-chain data services can include data originating external to blockchain network(s) 210. Such data can be utilized to support (or establish a state of) conditions associated with smart contracts, smart contract services leveraging the blockchain, digital wallet services, cryptocurrency transaction services, network survey application services coupled with a smart contract service(s) leveraging the blockchain, or the like, or suitable combinations of the foregoing.

Figure 3 depicts a block diagram of an example hardware identifier device 300 according to aspects of the disclosed embodiments. Hardware identifier device 300 can be embodied on a single monolithic chip, in one or more aspects. As a result, a common physical countermeasure shield (PCM shield) 350 can protect data and communication stored at hardware identifier device 300. Components of hardware identifier device 300 can communicate exclusively within an interior of the monolithic chip, in some disclosed aspects, insulating intra-chip communications from illicit access and enhancing reliability of data security. Data transmitted out from hardware identifier device 300 can be limited by instructions saved to embedded memory 322, or conditions set at access control 357, or both. In one or more embodiments, hardware identifier device 300 can perform the functions of hardware identifier device(s) 230 of Figure 2, *supra*, although hardware identifier device 300 is not limited to the functionality disclosed at communication environment 200.

Hardware identifier device 300 can include a microcontroller unit (MCU) 320 and a volatile memory 310, as shown, and an MCU bus 315 for storing and retrieving operating data 312 at volatile memory 310. MCU 320 can include an embedded memory 322 (volatile or non-volatile), which can include non-volatile on-chip ReMEM, in some embodiments. Volatile memory 310 can be utilized for operating data 312 associated with software or logic executed at MCU 320. Embedded memory 322 can store logic or code for interacting with secure element 330 over a SE bus 355. In some aspects, the logic or code can specify rules for complying with access control 357 limitations for interacting with secure element 330. Such limitations can include providing validation data that validates MCU 320 as authorized to interact with secure element 330, or validating data that validates a core of MCU 320 (*e.g.*, where MCU 320 is a multi-core processing device) as authorized to interact with secure element 330, that validates a process, thread, *etc.*, executed by a (authorized) core of MCU 320 as authorized to interact with secure element 330, as defined by access control 357 on SE bus 355. Embedded memory 322 can include instructions for an authorized core, process, thread, *etc.*, to access secret storage 334 of embedded ReMEM 332 within secure element 330. Embedded memory 322 can also include instructions for implementing disclosed functions, such as instructions for generating PUF data (or TRNG data) as identifier or proof or origin (PoO) data for hardware identifier device 300, instructions for retrieving PoO data for validating proof of possession, instructions for digitally signing data with the PoO data for encrypting the digitally signed data (*e.g.*, as part of a communication for a device coupled to hardware identifier device 300), instructions to digitally decrypt data signed with the PoO data or signed with second PoO data of another device (*e.g.*, a remote device, such as a node of blockchain network(s) 210 of Figure 2, *supra*; a node of P2P network 400 of Figure 4, *infra*, among others) in communication with a device coupled to hardware identifier device 300, among other suitable identifier functions, proof of origin functions, root of trust functions, cryptographic functions, or security functions for securing data or communications over an unsecure network. Secret storage 334 can be defined for a portion of non-volatile embedded ReMEM 332 to hold identifier data, proof of origin data, cryptographic key(s) or MPC key shares, data or algorithms for implementing a digital signature or decrypting digitally signed data, and the like.

In conjunction with generating (e.g., via PUF write command, or TRNG write command), storing or retrieving secure data, MCU 320 can communicate with secure element 330 over SE bus 355 without exposing such communications outside PCM shield 350. As disclosed herein, MCU 320 and volatile memory 310 can be embedded together with secure element 330 (and its sub-components) in a single monolithic chip on a single substrate, in various embodiments. This monolithic integration can enhance security of communications between MCU 320 and secure element 330.

Hardware identifier device 300 can include a physical interface 345 for short-range communicative coupling with a computing device (*e.g*., mobile device 220, a node of blockchain network(s) 210, a node of a peer-to-peer network, see for example Figures 4 and 5, *infra*). Physical interface 345 can be limited to hardware communication protocols such as a short-range wired communication protocol (*e.g*., universal serial bus (USB), Ethernet bus, Firewire (IEEE 1394) bus, high speed Serial Peripheral Interface (SPI), a parallel interface, an optical communication interface; or the like; see Figure 13, *infra*). In alternative or additional embodiments, an optional communication interface 340 can be provided. Optional communication interface 340 can be limited to a short-range wireless interface such as a Wi-Fi interface, a Bluetooth^{®} interface, a personal area network (PAN), a NFC interface, or similar. In at least one embodiment, optional communication interface 340 can be a dedicated and limited wide area network interface (*e.g*., a limited Internet connection) having only a set of target Internet Protocol addresses for which communication is permitted, such as an IP address of a cloud service provider's server equipment (*e.g*., a trusted manufacturer server device of a manufacturer of hardware identifier device 300 - not depicted). Such an optional communication interface 340 can be utilized to connect to a backup or recovery server to retrieve stored backup security data, such as a backup of secret storage data 334, or a backup of a MPC key share(s) that when coupled at least in part with a key share(s) stored at secret storage 334 can facilitate execution of a MPC digital signature algorithm, to encrypt or decrypt data with a plurality of MPC key shares (*e.g*., see U.S. Patent Application No. 18/753,784 incorporated by reference hereinabove).

Figure 4 illustrates an example peer-to-peer (P2P) network 400 according to additional embodiments of the present disclosure. P2P network 400 can be secured with respective proof of origin devices provided to each computing device operating within P2P network 400. Proof of origin devices can include, *e.g*., hardware identifier device(s) 230 of Figure 2, hardware identifier device 300 of Figure 3, or hardware application device 600 of Figure 6, or any suitable combinations thereof. Proof of origin devices can serve as proof of possession of electronic hardware to mitigate device spoofing on P2P network 400. For instance, proof of origin data can be supplied by a computing device from a connected proof of origin device to any other computing device connected to P2P network 400. In some embodiments, the proof of origin data can be verified so as to prove a network node is connected to actual computing hardware and not a fabricated number. The proof of origin data can be validated by any suitable modality. Examples include: looking up the proof of origin data at trusted manufacturer's server device (*e.g.*, to verify that the proof of origin data matches a device supplied by the authenticated manufacturer), referencing stored proof of origin data located in secure memory, or the like, or suitable combinations of the foregoing.

In some aspects of the disclosed embodiments, proof of origin data can be utilized to facilitate multi-party computation algorithms among a plurality of computing devices of P2P network 400. For example, respective proof of origin data of multiple hardware identifier devices can be utilized to generate MPC cryptographic key shares with a MPC key share generation algorithm. The MPC cryptographic key shares can be utilized by associated computing devices for encryption of data transmissions among computing devices on P2P network 400. Different subsets of computing devices can generate different MPC cryptographic keys on demand and without limit in one or more embodiments. Thus, device verification and data encryption can be an on-demand function of P2P network 400, allowing devices to connect to and disconnect from P2P network 400 without limit. When connecting, a proof of origin request can be supplied to prove possession of a (valid) proof of origin device for each node connecting to P2P network 400. Cryptographic key shares can then be generated with interconnected devices facilitating an on-demand cryptographic environment. Thus, each node of P2P network 400 can operate as a trusted device. This enables dynamic client-server relationships among nodes of P2P network 400, even for high-value services such as oracle-service data applications for a blockchain (*e.g.*, see Figure *5*, *infra*), digital wallet applications, cryptocurrency applications, off-chain data support applications for smart contracts, and the like.

As a more specific example, MPC security data can be generated by a smart phone 402B in conjunction with one or more other nodes of P2P network 400. As an example, a MPC algorithm can be employed by smart phone 402B (or PoO device(s) 412B) in conjunction with another node(s) of P2P network 400 to generate respective security data shares among such devices. The security data shares can then be utilized to encrypt and decrypt data at respective node devices (*e.g*., smart phone 402B and cloud server 402D; smart phone 402B, mobile device 402C, PoO device 412B and PoO device 412C, and other suitable combinations) with a MPC encryption algorithm. One or more PoO devices can also participate in MPC key generation. In at least one embodiment(s), smart phone 402B can generate MPC key shares with one or more PoO devices 412B coupled directly to smart phone 402B, as alternatives to other nodes of P2P network 400. Generally though, various suitable sub-combinations of node devices and PoO devices of P2P network 400 can participate in MPC key share generation for encryption of transmissions among nodes of P2P network 400.

As shown, P2P network 400 includes a personal computer 402A and associated proof of origin (PoO) device 412A, and various other types of computing devices. Included is a cloud server 402D and PoO device 412D, a smart phone 402B and PoO device 412B and mobile device 402C and PoO device 412C. Likewise, a cell phone 402F and PoO device 412F and laptop 402E and PoO device 412E are also illustrated. Computing devices 402A, 402B, 402C, 402D, 402E, 402F are hereinafter referred to collectively as computing devices 402A - 402F, and PoO devices 412A, 412B, 412C, 412D, 412E, 412F are hereinafter referred to collectively as PoO devices 412A - 412F. A number of computing devices 402A - 402F connected to P2P network 400 can be theoretically unlimited, subject only to availability of network hardware (or software, firmware, *etc.*) to interconnect the devices. Moreover, various computing devices 402A - 402F can be connected by different network connection modalities, including cellular networks, public switched telephone network(s) (PSTN(s)), DSL networks, cable networks, optical fiber networks, private local area and wide area networks, the Internet, and other suitable networks known in the art or reasonably conveyed to one of ordinary skill in the art by way of the context provided herein. P2P network 400 can be coupled with one or more service networks, such as a blockchain network and application service networks (*e.g*., see Figure 5, *infra*). In further embodiments, one or more of computing devices 402A - 402F can be an application service computing device or a gateway device to an application service network, or other suitable connection to shared, networked or bundled application computing services.

Because P2P network 400 utilizes PoO devices 412A - 412F to validate and authenticate nodes connected thereto, computing devices 402A - 402F can be interchangeable on P2P network 400. Thus, a person who possesses PoO device 412F can utilize cell phone 402F to connect to and interact with other computers 402A - 402F on P2P network 400, or can exchange cell phone 402F for another suitable computing device (a laptop device, a tablet device, a smart phone device, a desktop computer, a server device, an enterprise hardware device, and so on). Moreover, the computing device 402A - 402F possessing PoO device 412F can engage in client-server interactions with other computers 402A - 402F (and PoO devices 412A - 412F) - including as a client in the client-server relationship, as a server in the client-server relationship, or combinations thereof. By proving possession of PoO device 412F, different computing devices can be utilized for computing device 402F on P2P network 400, which are configured for communication on a networking environment (e.g., an Internet Protocol (IP) network, a Transport Control Protocol (TCP) network, a TCP/IP network, a cellular interconnected network, a satellite communication network, or any other suitable interconnection mechanism for computing devices 402A - 402F). Described differently, validation of nodes connected to P2P network 400 can be independent of computing devices 402A - 402F, and rely on PoO devices 412A - 412F instead. Proof of possession of PoO devices 412A - 412F can serve as the proxy for proof of user/possessor rather than (or at least in addition to) computing devices 402A - 402F.

Figure 5 depicts a block diagram of an example secure peer-to-peer network and blockchain 500 according to still further embodiments of the present disclosure. An application-enabled secure P2P network 505 is shown. P2P network 505 can be substantially as described above at P2P network 400 of Figure 4, in some embodiments, whereas in other embodiments P2P network 505 can include some of the features of P2P network 400 described above, and additional features described hereinbelow, similar features known in the art or reasonably conveyed to one of ordinary skill in the art by way of the context provided herein, or suitable combinations of the foregoing. For example, P2P network 505 can include a distributed application service (*e.g.*, a distributed off-chain data service application(s)). As another example, P2P network 505 can incorporate a distributed gateway application(s). In yet another example, combinations of distributed application service(s) and distributed gateway application(s) can be incorporated within P2P network 505.

P2P network 505 is communicatively connected with or (in part) forms a blockchain having one or more blockchain components 530. For instance, a node(s) of application-enabled secure P2P network 505 can also be a blockchain node of a blockchain incorporating one or more blockchain components 530. As another example, a node(s) of application-enabled secure P2P network 505 can be communicatively coupled to a blockchain node incorporating the blockchain components 530. Suitable combinations of the foregoing can be implemented within the scope of the present disclosure.

A blockchain(s) incorporating blockchain components 530 can be any suitable blockchain, such as a cryptocurrency blockchain (*e.g*., Bitcoin blockchain, Ethereum^{®} blockchain, and so forth) and can be integrated with third-party integrated application services 510. Integrated application services 510 can include a wallet service(s) 512, a blockchain oracle service(s) 514, a delegated service(s) 515, a DePIN service(s) 516, a blockchain validation service(s) 518, among others. In at least some embodiments, one or more integrated application services 510 can be supplied by a computing device 402A - 402F of secure P2P network 505, utilizing the proof of possession and device validation available through an associated PoO device 412A - 412F (*e.g.*, see below). Generally (though not exclusively), integrated applications 510 are provided by enterprise-level hardware components.

In addition to integrated applications 510 (provided on enterprise hardware), secure P2P network and blockchain 500 can incorporate peer node applications 520. Peer node applications 520 can run on nodes of application-enabled secure P2P network 505. These peer nodes can include any of computing devices 402A - 402F. Because of the secure environment provided by secure P2P network 505, peer node applications 520 can also include at least some services provided by integrated applications 510 (*e.g.*, in parallel with, as supplements to, or as sub-providers of), including off-chain oracle data services for providing trusted real-world data to blockchain components 530 that are managed, governed or facilitated by various smart contracts 540. Depicted is a first oracle application₁ 522 through an N^{th} oracle application_{N} 524 (referred to hereinafter collectively as oracle applications 522 - 524). Nodes of application-enabled secure P2P network 505 can utilize other peer nodes thereof for the peer node applications 520, and can also take advantage of services of integrated applications 510, or both.

A suitable example of a smart contract service 528 that can be implemented at a peer node application 520 of application-enabled secure P2P network 505 is a data oracle service supplying off-chain data required or at least usable by a smart contract(s) 540 of blockchain components 530. Off-chain data can be objective or quasi-objective data, such as stock price data, asset price data, cryptocurrency price data, digital token price data, status of a digital condition(s), such as whether a transaction is digitally signed by a suitable digital signature (*e.g*., a paired private key; a share of a MPC key; *etc.*), whether parties to an agreement have agreed to all privileges and duties defined in the agreement, whether assets securing an agreement are available for disposition as defined in the agreement, or the like, or suitable combinations of the foregoing. Off-chain data can also include subjective data, such as user device opinion data, online survey data, user polling data from users of computing devices 402A - 402F, and the like, and suitable combinations of the foregoing. As an illustrative example of subjective data, survey service application(s) (whether operating at integrated applications 510 or peer node applications 520) can distribute data requests to computing devices 402A - 402F and receive data in response to the data request. Data received can be analyzed to verify whether it complies with any conditions specified in the data request(s), and upon determining the data satisfies any suitable conditions, provide the results data to a smart contract 540. In response, the smart contract 540 can implement a conditional action, such as assign a digital asset (*e.g*., cryptocurrency, digital token, digital coupon, *etc.*) to an account associated with the computing device 402A - 402F that satisfied the data request.

Data request services can incorporate conditions, characteristics, approved sources, and the like, of desired data with multiple qualifying criteria. Where privacy is desired, proof of Origin data of PoO devices 412A - 412F can also facilitate follow-up data request submissions to computing devices 402A - 402F as well as (anonymous) know your customer applications, without a user of a computing device having to surrender private information, such as name, email address, phone number, and so on. Still further, proof of origin data of PoO devices 412A - 412F can substantially mitigate or avoid bogus data requests from bot accounts and undesired activation of smart contract resources (*e.g*., cryptocurrency, digital tokens, digital coupons, ...) to spoofed computing devices, bot devices, or other devices not associated with an actual user.

Peer node applications 520 can inter-operate with integrated applications 510 and blockchain components 530 creating a very robust and dynamic service environment. Blockchain components 530 governed by smart contracts 540 can include decentralized autonomous organizations (DAOs) 542, vault services 544 for storing digital assets such as user cryptocurrencies (*e.g.*, cryptocurrency tokens 546) in associated user accounts (*e.g.*, assigned to a PoO device 412A - 412F, or a computing device 412A - 412F or a user, as suitable) also managed by smart contract(s) 540. Smart contracts 540 can govern bridge components 548 for interconnecting different blockchains and transactions among blockchains (*e.g*., a bridge 548 between the Bitcoin blockchain and Ethereum blockchain as one illustrative example in the cryptocurrency space), and for incorporation of integrated applications 510 and peer node applications 520 with such blockchains, as well as other components 549 as would be evident to one of skill in the art or reasonably conveyed to one of ordinary skill by way of the context provided herein.

In further embodiments, two or more nodes of secure P2P network 505 can contain and execute a distributed oracle application(s) 526. Distributed oracle application(s) 526 can engage computing resources of the two or more nodes to serve off-chain data requests from a blockchain. The distributed oracle application(s) 526 can increase computing resources allocated to serve an increase in data requests, and decrease computing resources allocated to serve decreased data requests. Computing resources can include a number of nodes serving data requests, processing resources of the two or more nodes, memory resources of the two or more nodes, network resources of the two or more nodes, or data source connection resources of the two or more nodes (*e.g*., access to a data server/database storing requested data, access to a data network providing or containing requested data, *etc.*), or the like, or a suitable combination of the foregoing. Distributed oracle application(s) 526 can accommodate incorporation of new nodes joining secure P2P network 505 executing distributed oracle application(s) 526, as well as accommodate separation of nodes leaving secure P2P network 505 and serving off-chain data requests from fewer nodes that remain executing distributed oracle application(s) 526 within secure P2P network 505.

In still further embodiments, two or more nodes of secure P2P network 505 can contain and execute a distributed gateway application(s) 528. Distributed gateway application(s) 528 can engage computing and network communication resources of the two or more nodes to serve as gateway devices for secure P2P network 505. The gateway devices can facilitate communication between secure P2P network 505 and blockchain components 530, integrated applications 510, or other devices not depicted. The gateway devices can serve communications to secure P2P network 505 from an exterior thereof (*e.g*., from blockchain components 530 or integrated applications 510) or from nodes of secure P2P network 505 to the exterior thereof. In various embodiments, the gateway devices can serve oracle data requests described herein. The distributed gateway application(s) 528 can increase computing resources allocated to embody the gateway devices. Computing resources can include a number of nodes acting as a distributed gateway(s), processing resources acting as the distributed gateway(s), memory resources acting as the distributed gateway(s), network resources acting as the distributed gateway(s), or data source connection resources acting as the distributed gateway(s), or the like, or a suitable combination of the foregoing. Distributed gateway application(s) 528 can accommodate incorporation of new nodes joining secure P2P network 505 executing distributed gateway application(s) 528, as well as accommodate separation of nodes leaving secure P2P network 505 and serving off-chain data requests from fewer nodes that remain executing distributed gateway application(s) 528 within secure P2P network 505.

Figure 6 depicts a block diagram of an example integrated circuit device implemented as a hardware identifier and application device (hereinafter: hardware application device) 600 on a single monolithic chip, according to various aspects of the disclosed embodiments. Hardware application device 600 can serve as a proof of origin device (*e.g*., similar to hardware identifier device(s) 230 of Figure 2 or hardware identifier device 300 of Figure 3, *supra*), as described herein. In addition, hardware application device 600 can include executable logic and memory for storing application instructions to implement application functions at hardware application device 600. As one example, hardware application device 600 can include executable logic and memory with instructions for storage and accounting of cryptocurrency assets at a secure memory, instructions to facilitate cryptocurrency transactions, or other suitable cryptocurrency or blockchain functions. As another example, application functions can include: off-chain data applications such as oracle applications, application services that support or involve smart contracts, such as data survey service functions, distributed oracle applications, distributed gateway applications, and the like, and combinations thereof. Such functions can be implemented internally for hardware application device 600, can be implemented on behalf of a client device directly coupled to hardware application device 600 (*e.g*., mobile device 220 of Figure 2), or can be implemented on behalf of a remote client device (*e.g*., computing device 402A - 402F) within a secure P2P network 400, or other network. Described differently, server functions of the computing device (*e.g*., mobile device 220) operating as a server device in a client-server relationship with a client device (*e.g.*, a node of a blockchain network(s) 210) over remote communication 242 can be outsourced in part or in whole to hardware application device 600 via physical interface 655 (or optional dedicated and limited communication interface 650).

Hardware application device 600 can include a microcontroller unit (MCU) 630, an on-chip non-volatile memory 620 (*e.g*., resistive memory: ReMEM, phase change memory (PCM), programmable metallization memory, magneto-resistive memory (MRAM), among others, which are referred to hereinafter as on-chip ReMEM 620 for convenience) and a volatile memory 610, as shown. MCU 630 can include an embedded memory 632 (volatile or non-volatile) in one or more embodiments, which can include at least a portion of on-chip ReMEM 620 or can be separate from and in addition to on-chip ReMEM 620, in further embodiments. On-chip ReMEM 620 can store application code for execution at MCU 630. Volatile memory 610 can be utilized for operating data associated with executing application code at MCU 630, at least a portion of which can also be stored at embedded memory 632, where suitable.

In conjunction with executing a cryptographic application(s), MCU 630 can communicate with a secure element 640. As disclosed herein, MCU 630, on-chip ReMEM 620 and volatile memory 610 can be embedded together with secure element 640 (and its sub-components) in a single monolithic chip on a single substrate, in various embodiments. This monolithic integration can enhance security of communications between MCU 630 and secure element 640. Moreover, secure element 640 can include hardware-encoded security, secret data or cryptocurrency-related algorithms 642 (which can include, *e.g*., digital signature algorithms, signature validation algorithms, blockchain validation algorithms, PUF data generation algorithms, MPC key share generation algorithms, MPC digital signature and signature validation algorithms, MPC encryption and decryption algorithms, *etc.*), or other algorithms for application security, user security, digital asset security, or digital transaction security, or suitable combinations of the foregoing, and are hereinafter referred to as hardware encoded security algorithms 642 for convenience.

Encoding of hardware encoded security algorithms 642 can be implemented primarily (although not necessarily exclusively) at manufacture. Hardware encoded can include hardware assisted security algorithms, as well as hardware accelerated security algorithms, or the like, or suitable combinations of the foregoing. This makes algorithms executed by hardware encoded security algorithms 642 largely immune to software-based malware, providing significant security. In addition, hardware encoding can achieve processing times far faster than a software processor, in some cases up to 10x faster or even more. As a general characteristic then, hardware encoded security algorithms 642 can significantly enhance both performance and security of computations performed at hardware application device 600.

Hardware-encoded logic primitives (which can also be referred to as atomic operations) can be executed independently to produce a result (*e.g*., a result of an atomic algorithm or of the atomic operation). Moreover, these atomic operations can also be combined (*e.g*., executed in a sequence) to produce another algorithm, which can be referred to herein by extending the atomic analogy as a molecular operation (combining multiple atomic operations). This other algorithm is generally more complex as it combines multiple atomic operations. Moreover, atomic operations can be combined in different sequences to produce other (unique) molecular operations, different from the prior molecular operation. Accordingly, encoding a plurality of hardware-logic segments to realize a set of atomic operations can be leveraged by MCU 630 to execute a fairly diverse set of algorithms, including cryptographic algorithms, blockchain algorithms, service application algorithms (*e.g*., peer node applications 520), secure authentication or validation algorithms, and so on. As a brief illustrative example, three logic primitives can respectively define: a user authentication process, a cryptocurrency hash algorithm and a validation of a cryptocurrency transaction (although respective primitives can define subsets of one or more of these algorithms and combined in sequence to implement a single algorithm also). When executed separately, their respective functions are performed. When executed in combination and in sequence, however, more complex functions are performed. For example, the three logic primitives in combination can effect: a user authentication, cryptocurrency hash computation and a validation of a cryptocurrency transaction.

Hardware encoded security algorithms 642 can be executed in response to a command(s) received at secure element 640 from MCU 630. Where embodying cryptographic primitives, hardware encoded security algorithms 642 can receive commands (or command arguments) specifying a sequence order of executing a plurality of primitives that implement an algorithm more complex than individual primitives. Moreover, different subsets of primitives or different sequences, or combinations thereof, can each implement different algorithms as described herein or as would be known in the art or reasonably conveyed to one of ordinary skill in the art by way of the context provided herein.

In a particular example, hardware encoded security algorithms 642 can include hardware logic encoding MPC digital signature and signature validation algorithms (referred to hereinafter as MPC sign and validation algorithms 643A). MPC sign and validation algorithms 643A can be utilized to generate or participate in generation of secret data and secret data segments (*e.g*., key shares) for MPC digital signature applications and MPC signature validation applications. By encoding MPC sign and validation algorithms 643A in hardware encoded logic, even as a set of logic primitives as introduced above, highly intensive MPC digital signature and MPC signature validation processes can be executed quickly and efficiently, enhancing user experience of such processes when utilizing hardware application device 600. Hardware encoded security algorithms 642 can also include zero knowledge proof (ZKP) algorithms 643B, authentication algorithms 643C such as FIDO2, or the like, post-quantum cryptography (PQC) algorithms 643D (in addition to MPC sign and validation algorithms 643A, ZKP algorithms 643B and authentication algorithms 643C, where suitable), and other suitable algorithms known in the art or reasonably conveyed to one of ordinary skill in the art by way of the context disclosed herein. Moreover, hardware logic 643E associated with peer node applications 520 can be implemented in hardware encoded security algorithms 642 as well.

Illustrative examples of algorithms that can be encoded into hardware encoded security algorithms 642 can include public key signature algorithms, authentication and key derivation algorithms, key agreement algorithms, hash algorithms, encryption algorithms, secret sharing algorithms, homomorphic encryption algorithms, atomic acceleration for ZKP algorithms 643B, and the like, and suitable combinations of the foregoing. As further (but non-limiting) examples, public key signature algorithms can include Elliptic Curve Digital Signature Algorithm (ECDSA), Schnorr signature algorithm, Edwards-curve Digital Signature Algorithm (EdDSA), among others. Authentication and key derivation algorithms can include, among others: Hash-based Message Authentication Code (HMAC) and Password-Based Key Derivation Function 1 (PBKDF1) or PBKDF2. A suitable key agreement algorithm can be an Elliptic-Curve Diffie-Hellman (ECDH) algorithm, whereas suitable hash algorithms can include: Secure Hash Algorithm (SHA), SHA-0, SHA-1, SHA-2, SHA-3, Research and development in Advanced Communications technologies in Europe (RACE) Integrity Primitives Evaluation (RIPE) Message Digest algorithm (RIPEMD) 160 (RIPEMD-160), RIPEMD-256, RIPEMD-320, BLAKE2, BLAKE3, BLAKE-256, BLAKE-224, BLAKE-512, BLAKE-384, and so on. Still further, suitable encryption algorithms can include: Advanced Encryption Standard (AES), ChaCha20, Salsa20, Poly1305, ChaCha20-Poly1305, and others. Secret sharing algorithms can include: Shamir's Secret Sharing (SSS), Verifiable Secret Sharing (VSS), as well as others, and homomorphic encryption can include a Paillier cryptosystem, among others.

Secure element 640 can include an embedded ReMEM 646. Embedded ReMEM 646 can include a secret storage 648 that includes secret data (*e.g*., identifier data, proof of origin data, root of trust data, derivative data that is derived from root of trust data (*e.g.*, a hash of root of trust data), PUF data, and so on). In at least one embodiment, embedded ReMEM 646 can optionally be set to no read / no write to prevent access to secret storage 648. In such embodiment(s), embedded ReMEM 646 can have limited processing logic to process a simple query associated with the secret data stored in secret storage 648, without exposing the secret data external to embedded ReMEM 646. The simple query can confirm a hash algorithm, confirm an encryption/decryption result, or the like, initiated with the secret data or in conjunction with the secret data (*e.g.*, in a MPC algorithm utilizing the secret data in part with other secret data). In other embodiments, embedded ReMEM 646 can permit access to secret storage 648 on a limited basis. For example, hardware encoded security algorithms 642 can be permitted to access secret storage 648, but nothing external to secure element 640, in an embodiment(s). Secure element 640 (or embedded ReMEM 646) can be configured to differentiate commands, data requests, and the like, originating at hardware encoded security algorithms 642 from requests originating external to secure element 640, in such embodiment(s). In other embodiments, such differentiation can be implemented at access control 647 (see below). In still other embodiments, subsets of secret storage 648, such as proof of origin data, can be authorized for transmission from hardware application device 600 (*e.g.*, on physical interface 655 or optional dedicated and limited communication interface 650) to validate an associated computing device on a network (*e.g*., computing devices 402A - 402F), whereas other data is limited to MCU 630, or limited to hardware algorithms 642, or the like.

In some embodiments, embedded ReMEM 646 can include circuitry for in-memory processing (or processing in-memory: PIM). PIM circuitry can be incorporated within embedded ReMEM 646 to facilitate one or more logic or mathematical operations or sequences of logic or mathematical operations within or immediately adjacent to (*e.g.*, coupled to sense circuits, or the like) an array structure of embedded ReMEM 646. PIM circuitry can be responsive to hardware encoded security algorithms 642 of secure element 640, in some embodiments, or can be responsive to commands from MCU 630 (authorized by access control 647) in further embodiments.

In one or more embodiments, secure element 640 can include optional volatile memory 644. Optional volatile memory 644 can be utilized as working memory to store values, logic states, logic conditions, *etc.,* of hardware encoded security algorithms 642. As one example, where a hardware encoded security algorithm 642 involves execution of multiple logic primitives, a data value(s) resulting from execution of a first logic primitive (*e.g*., a MPC signature validation) can be held at optional volatile memory 644 and accessed by a subsequent logic primitive (*e.g.*, a cryptocurrency transaction depending on successful MPC signature validation) to produce a second data value(s), and so on.

In some embodiments of the present disclosure, hardware application device 600 can include an optional communication interface 650. Optional communication interface 650 can be configured to provide limited communication with an external device, or network. This limited communication can facilitate participation in an MPC algorithm, such as MPC secret data generation, MPC digital signature or MPC signature validation, or backup or recovery of MPC key shares, or the like. Alternatively, or in addition, this limited communication can facilitate receipt and storage of an encrypted secret data segment(s) (and associated decryption data) of one or more computing devices participating in MPC secret data generation and segmentation. In yet another example, this limited communication can facilitate transmission of an encrypted secret data segment generated in part by hardware application device 600 and associated decryption data to another device for backup storage. In still further examples, this limited communication can facilitate login to a recovery service and recovery of an encrypted secret data segment and associated decryption data, to recover data lost by another hardware application device 600 at hardware application device 600 so that the latter can participate in a MPC algorithm, or to facilitate recovery of such encrypted secret data segment and decryption data for another computing device to participate in the MPC algorithm. In at least some embodiments, the limited communication can facilitate validation of a device against data stored at secret storage 648, authentication of user credentials, executing a cryptographic algorithm, participating in a blockchain validation algorithm, or participating in a multi-party computation (MPC) process associated with any of the foregoing or associated with a like operation. In at least one disclosed aspect, this limited communication can be leveraged on behalf of a client device connected to hardware application device 600 at physical interface 655, or a remote node of a secure P2P network 500 served by hardware application device 600 (or served by a computing device 402A - 402F coupled to hardware application device 600).

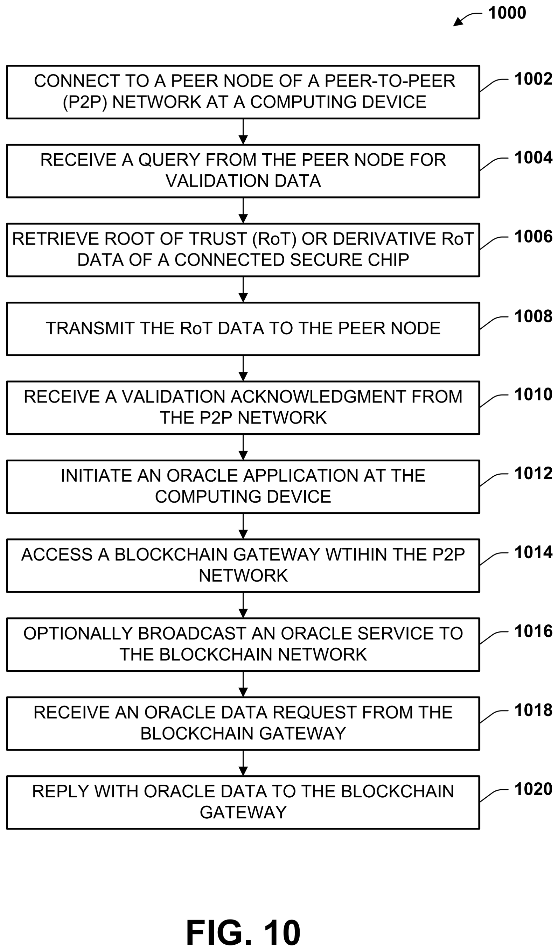

In some embodiments, a physical interface 655 is provided to communicatively couple hardware application device to an external computing device, such as mobile device 220 or a node of a secure P2P network 400 or a node of a blockchain network(s) 210. Physical interface 655 can employ any suitable physical communication protocol or form factor, such as a short-range wired communication protocol (*e.g*., universal serial bus (USB), Ethernet bus, Firewire (IEEE 1394) bus, high speed Serial Peripheral Interface (SPI), a parallel interface, SD interface, mini-SD interface, micro-SD interface, or the like; see also Figure 10, *infra*). In other embodiments, an optional communication interface 650 can be provided for a limited or a short-range wireless interface such as a Wi-Fi interface, a Bluetooth^{®} interface, a personal area network (PAN), a NFC network, or similar. In at least one embodiment, optional communication interface 650 can be a dedicated and limited wide area network interface (*e.g.*, a limited Internet connection) having only a set of target Internet Protocol addresses for which communication is permitted, such as an IP address of a cloud service provider's server equipment (*e.g*., an enterprise node of secure P2P network 400, or an application service 510, or the like) for backup or recovery of MPC key share data, device validation functions, or other suitable security, backup or recovery functions.

Internally, hardware application device 600 can provide different communication bus structures for communications among components thereof. An MCU bus 635 can provide communications between MCU 630 and volatile memory 610 and on-chip ReMEM 620. MCU bus 635 can be an unrestricted bus, facilitating all suitable electronic communication between a processor and memory(ies) as known in the art. In addition, an SE bus 645 can facilitate communication between MCU 630 and SE 640. In at least some embodiments, SE bus 645 can be a limited communication bus governed at least in part by an access control 647. For instance, where MCU 630 is a multi-core processor, SE bus 645 can be permitted by access control 647 to facilitate communication between MCU 630 and SE 640 originating at a first core of the multi-core processor (*e.g.*, an authorized core; a core having a valid authorization code, *etc.*) and can be restricted by access control 647 from communication between MCU 630 and SE 640 originating at a second core of the multi-core processor (*e.g*., an unauthorized core; a core not having the valid authorization code, *etc.*). As another example, access control 647 can permit communication between MCU 630 and SE 640 for an application, a process, or a logic thread being executed by MCU 630 that is authorized to communicate with SE 640, or for a process or logic being executed at hardware encoded security algorithms 642 that is authorized to communicate with MCU 630, or to utilize MCU 630 and optional communication interface 650 to communicate with an external device(s) (*e.g*., participate in a MPC data generation, signature, signature validation, backup or recovery process), or a suitable combination of the foregoing (*e.g.*, see U.S. Patent Application No. 18/218,948, incorporated by reference hereinabove, at Figures 3-5 and associated written descriptions, among others thereof).

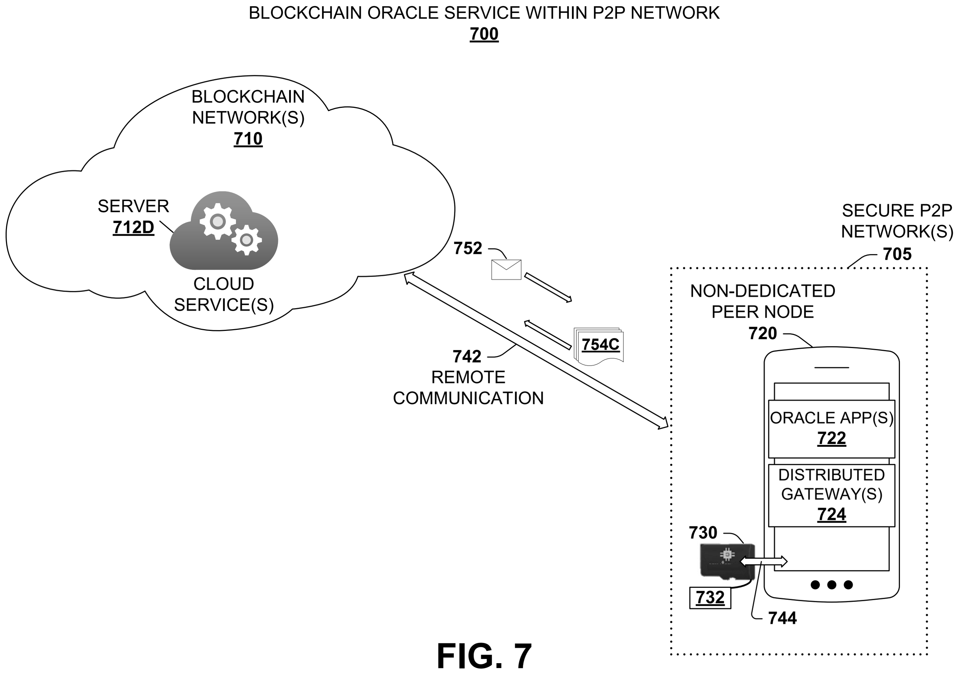

Figure 7 illustrates a diagram of an example oracle data service within a P2P network environment 700, according to alternative or additional aspects of the disclosed embodiments. A non-dedicated peer node 720 is shown within a secure P2P network, such as secure P2P network 400 of Figure 4, or secure P2P network 505 of Figure 5, *supra.* Non-dedicated peer node 720 is not limited to trusted enterprise hardware communicatively coupled to secure P2P network(s) 505 and operating as a relatively permanent server device. Rather, non-dedicated peer node 720 can be a node that connects to or disconnects from secure P2P network(s) 505 on a more frequent basis, and therefore can include non-enterprise hardware devices, such as laptop computers, desktop computers, smart devices, mobile devices, and more generally consumer computing devices, network edge devices, and so on. Nevertheless, while coupled to secure P2P network(s) 505, non-dedicated peer node 720 can connect with other peer nodes as a client in a client-server relationship(s), or receive connections from other peer nodes as a server in a client-server relationship(s), or a combination of the foregoing.

Non-dedicated peer node 720 can contain (*e.g.* house) or be connected to (*e.g.*, by physical wire, cable, fiber, *etc.,* or short-range wireless connection) a hardware identifier device 730. Hardware identifier device 730 can include the components and functionality of hardware identifier device 300 of Figure 3. In various aspects of the disclosed embodiments, hardware identifier device 730 can be substantially similar to hardware application device 600 of Figure 6, or other suitable device disclosed herein, or variations thereof reasonably conveyed to one of ordinary skill in the art by way of the context provided herein. For instance, hardware identifier device 730 can contain proof of origin data 732 unique (or substantially unique) to hardware identifier device 730 proving proof of possession of hardware identifier device 730 to other nodes of secure P2P network(s) 505. In addition, proof of origin data 732 can be utilized to generate secure data (*e.g*., cryptographic key(s), MPC key shares, and so on) for securing communications among nodes of secure P2P network(s) 505 and among devices external to secure P2P network(s), such as mobile device 402C or a node of a blockchain network(s) 210.

In various aspects of the disclosed embodiments, non-dedicated peer node 720 can include an oracle data service application 722. Oracle service application 722 can be configured to provide off-chain data for a blockchain network(s) 710, as described herein. Non-dedicated peer node 720 can communicatively couple with a blockchain node of blockchain network(s) 710 over a remote communication 742 to facilitate blockchain-related transactions affecting a node of blockchain network(s) 710. As an alternative, oracle service application 722 can also include a blockchain application component that when executed at non-dedicated peer node 720 can cause non-dedicated peer node 720 to operate as a blockchain node on blockchain network(s) 710. In such aspects, non-dedicated peer node 720 can broadcast oracle data services as governed by blockchain rules (*e.g.*, Bitcoin blockchain rules, Ethereum blockchain rules, *etc.*) incorporated within the blockchain application component of oracle service application 722.

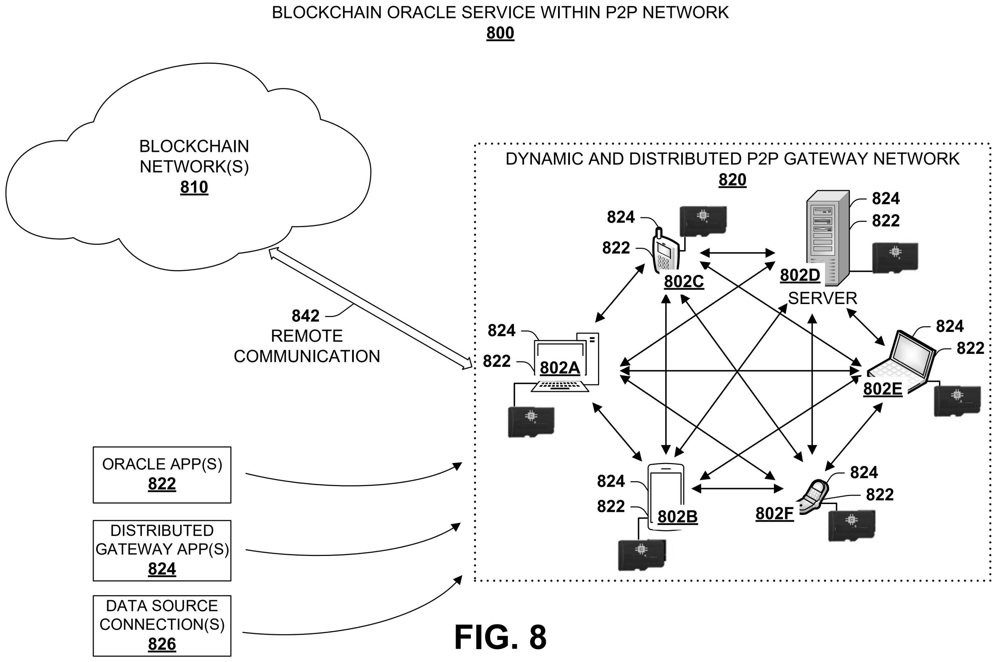

Figure 8 depicts a further embodiment of the present disclosure including a blockchain oracle service within a secure P2P network 800. Shown is a dynamic and distributed P2P gateway network 820 coupled to a blockchain network(s) 810 by way of a remote communication 842. In some embodiments, dynamic and distributed P2P gateway network 820 can in part incorporate blockchain network(s) 810, for example, where a node(s) of the P2P gateway network (820) is also a node(s) of blockchain network(s) 810. Dynamic and distributed P2P gateway network 820 includes peer nodes, such as desktop computer(s) 802A, smart phone 802B, mobile phone 802C, server device 802D, laptop 802E, cell phone 802F and like devices (referred to collectively as computing devices 802A - 802F). Each peer node can contain a PoO device utilized to authenticate an associated computing device within the P2P network. Still further, a plurality of peer nodes can include distributed oracle applications 822, and distributed gateway applications 824. Distributed oracle applications 822 facilitate serving oracle data requests from blockchain network(s) 810 with dynamic peer node resources configured to increase resources to meet increasing data requests, and decrease resources in response to decreasing data requests. In at least some embodiments, distributed oracle applications 822 can facilitate additional connectivity and computing resources to data source connections 826 to increase or decrease data transfer from data source connection(s) 826 to respond to the oracle data requests as well. Likewise, distributed gateway applications 824 facilitate increasing network resources to form a distributed gateway between blockchain network(s) 810 and dynamic and distributed P2P gateway network 820. Distributed gateway applications 824 can increase computing and networking resources allocated to the distributed gateway in response to an increase in communications on remote communication 842 and decrease computing and networking resources allocated to the distributed gateway in response to a decrease in the communications.

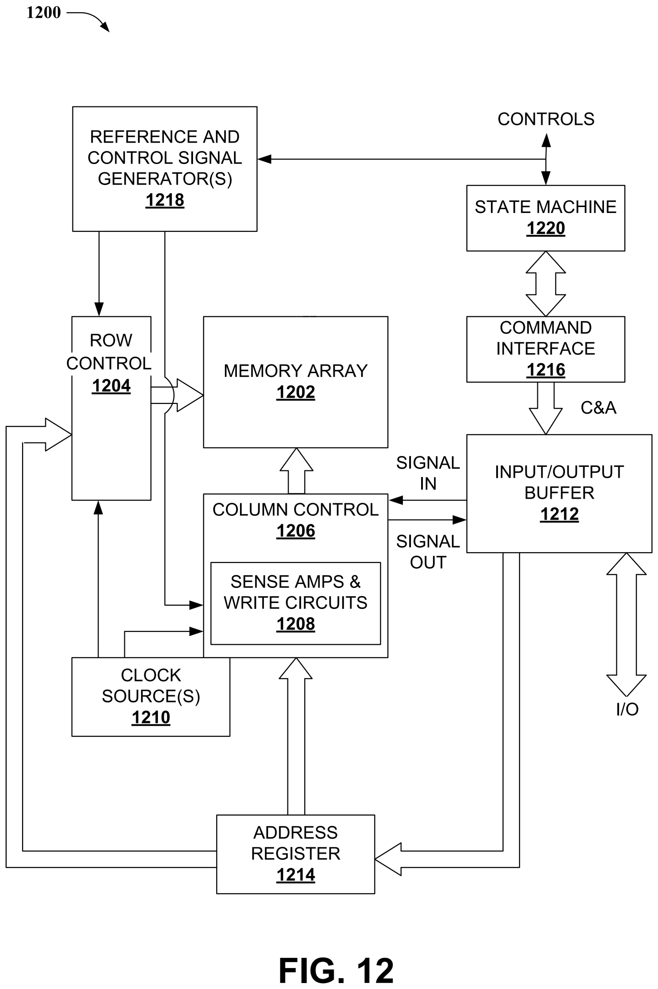

The diagrams included herein are described with respect to several electronic devices, computing devices, and a communication system facilitating proof of origin for edge device communication on unsecure networks. It should be appreciated that such diagrams can include those electronic or computing devices, communication systems, *etc.*, specified therein, some of the specified devices / systems, or additional devices / systems not explicitly depicted but known in the art or reasonably conveyed to those of skill in the art by way of the context provided herein. Components of disclosed integrated circuit devices can also be implemented as sub-components of another disclosed component (*e.g*., embedded memory 632 can be in part or in whole a sub-component of on-chip ReMEM 620; access control 647 can be integrated with SE bus 645, *etc.*), whereas other components disclosed as sub-components can be separate components in various embodiments (*e.g*., process/core control 118 can be separate from and communicatively connected to access control 116; embedded ReMEM 646 can be separate from and communicatively connected to secure element 640, and so forth). Further, embodiments within a particular Figure of the present specification can be applied in part or in whole to other embodiments depicted in other Figures without limitation, subject only to suitability to achieving a disclosed function or purpose as understood by one of skill in the art, and *vice versa.* As illustrative (and non-limiting) examples, hardware application device 600 can be substituted for hardware identifier device 230 of Figure 2 or proof of origin devices 412A - 412F of Figure 4; MCU 330 (and MCU 630) can incorporate some or all memory array control components of Figure 12 (*e.g.*, row control 1204, sense amps 1208, column control 1206, clock source(s) 1210, address register 1214, reference and control signal(s) generator 1218, state machine 1220, input/output buffer 1212, command interface 1216), or suitable components of operating and control environment 1200 or environment 1300 can be substituted or added to other components or integrated circuit devices disclosed herein, and so forth. Additionally, it is noted that one or more disclosed processes can be combined into a single process providing aggregate functionality. For instance, a cryptographic algorithm process can include a secure user/device authentication process, or *vice* versa, to facilitate device validation and encrypted data transmission on unsecure networks, by way of a single process. Components of the disclosed devices and systems can also interact with one or more other components not specifically described herein but known by or reasonably conveyed to those of skill in the art.

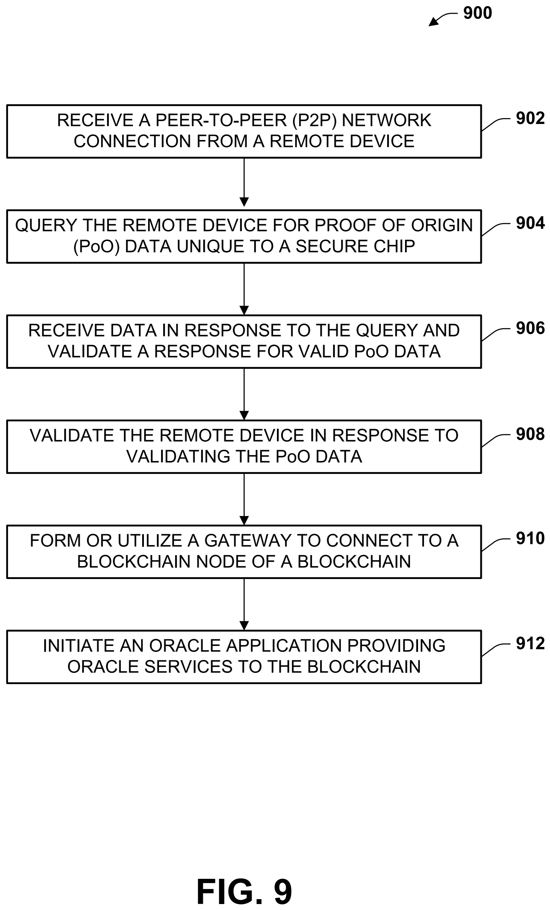

In view of the exemplary diagrams described *supra*, a process method(s) that can be implemented in accordance with the disclosed subject matter will be better appreciated with reference to the flow chart of Figures 9 - 11. While for purposes of simplicity of explanation, the method(s) of Figures 9 - 11 are shown and described as a series of blocks, it is to be understood and appreciated that the claimed subject matter is not limited by the order of the blocks, as some blocks may occur in different orders or concurrently with other blocks from what is depicted and described herein. Moreover, not all illustrated blocks may be required to implement the methods described herein, and in some embodiments additional steps known in the art or reasonably conveyed to one of ordinary skill in the art by way of the context provided herein can be implemented as part of a disclosed method within the scope of the present disclosure. Further, some steps illustrated as part of one process can be implemented for another process where suitable; other steps of one or more processes can be added or substituted in other processes disclosed herein within the scope of the present disclosure. Additionally, it should be further appreciated that the methods disclosed throughout this specification are capable of being stored on an article of manufacture to facilitate transporting and transferring such methods to an electronic device, stored in embedded memory within the electronic device, and so forth. The term article of manufacture, as used, is intended to encompass a computer program accessible from any computer-readable device, device in conjunction with a carrier, or storage medium, or the like.

Figure 9 illustrates a flowchart of an example method 900 for providing a secure network to serve oracle data request for a blockchain, in alternative or additional aspects of the presently disclosed embodiments. At 902, method 900 can comprise receiving a peer-to-peer (P2P) network connection request from a remote device. The remote device can be a server device, such as enterprise hardware, or can be a laptop, a personal computer, a mobile device, a smart phone, a cell phone, a tablet computer, or any other suitable computing device, network of computing devices, distributed computing devices, and so on. The connection can be an unsecured network connection, or can be a public network connection, a private network connection, a direct peer connection, an indirect peer connection, or the like, or suitable combinations thereof. At 904, method 900 can comprise querying the remote device for proof of origin (PoO) data unique to a secure hardware device. The PoO data can be root of trust data, data derived from root of trust data, data generated from a physical unclonable function (PUF), data generated from a PUF implemented on resistive switching memory (or MOS transistor memory, or SRAM memory) embedded monolithically within the secure hardware device, or the like, or a suitable combination of the foregoing. At 906, method 900 can comprise receiving data in response to the query and validating the response data for valid PoO data. Validation can include referencing the response data at a trusted hardware device (*e.g.*, a manufacturer's web server), referencing secure memory containing valid PoO data, analyzing the PoO data for compliance with a security algorithm (*e.g*., utilizing the PoO data to generate a digital signature, utilizing the PoO data to decrypt digitally signed data, or the like) and others, or suitable combinations of the foregoing. At 908, method 900 can comprise validating the remote device in response to validating the PoO data, and at 910, method 900 can comprise forming or utilizing a gateway to connect to a blockchain node of a blockchain, and at 912, method 900 can comprise initiating an off-chain data oracle application service for the blockchain.

Figure 10 illustrates a flowchart of a sample method 1000 according to alternative or additional embodiments of the present disclosure. At 1002, method 1000 can comprise connecting to a peer node of a P2P network at a computing device. At 1004, method 1000 can comprise receiving a query from the peer node for validation data. At 1006, method 1000 can comprise retrieving root of trust (RoT) or derivative RoT data of the computing device or of a connected secure chip. The derivative RoT data can be a hash of the RoT data, or other algorithm-controlled modification of the RoT data. At 1008, method 1000 can comprise transmitting the RoT data to the peer node, and at 1010, method 1000 can comprise receiving a validation acknowledgement from the P2P network. At 1012, method 1000 can comprise initiating an oracle application at the computing device, and at 1014, method 1000 can comprise accessing a blockchain gateway within the P2P network. The blockchain gateway can be a distributed gateway, in one or more embodiments, *e.g*., as described herein. At 1016, method 1000 can optionally comprise broadcasting an oracle application service on the P2P network, or on the blockchain network. At 1018, method 1000 can comprise receiving an oracle data request from the blockchain network and through the blockchain gateway. At 1020, method 1000 can comprise replying with oracle data to the blockchain gateway and blockchain network.

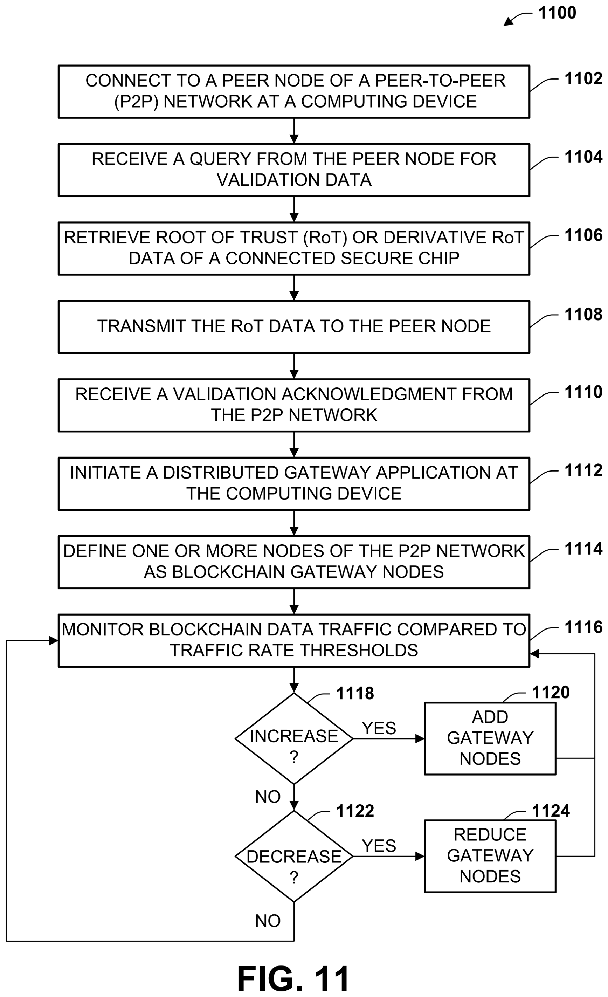

Figure 11 illustrates a flowchart of an example method 1100 for providing distributed gateway services for a P2P network communicatively coupled to a blockchain network, in further aspects of the disclosed embodiments. At 1102, method 1100 can comprise connecting to a peer node of a P2P network at a computing device, and at 1104 method 1100 can comprise receiving a query from the peer node for validation data. At 1106, method 1100 can comprise retrieving root of trust (RoT) or derivative RoT data of a connected secure chip, and at 1108, method 1100 can comprise transmitting the RoT data to the peer node. At 1110, method 1100 can comprise receiving a validation acknowledgement from the P2P network, and at 1112, method 1100 can comprise initiating a distributed gateway application at the computing device.

At 1114, method 1100 can comprise defining one or more nodes of the P2P network as blockchain gateway nodes embodying a distributed gateway. At 1116, method 1100 can comprise monitor blockchain data traffic compared to traffic rate thresholds. At 1118, method 1100 can comprise determining whether an increase in data traffic is determined, and if so, method 1100 can proceed to 1120 and increase a number of gateway nodes embodying the distributed gateway, and can return to reference number 1116. If no increase in data traffic is detected at 1118, method 1100 can proceed to 1122 and can comprise determining whether a decrease in data traffic is determined. If no, method 1100 can return to reference number 1116; if yes, method 1122 can proceed to 1124 and reduce the number of gateway nodes (if greater than one) embodying the distributed gateway.

### EXAMPLE OPERATING ENVIRONMENTS

Figure 12 illustrates a block diagram of an example operating and control environment 1200 for a memory array 1202 of a memory device according to aspects of the subject disclosure. Control environment 1200 and memory array 1202 can be formed within a single semiconductor die in some embodiments, although the subject disclosure is not so limited and in other embodiments some components of control environment 1200 can be formed on a separate semiconductor die communicatively connected with the semiconductor die. In at least one aspect of the subject disclosure, memory array 1202 can comprise memory selected from a variety of memory cell technologies. In at least one embodiment, memory array 1202 can comprise a two-terminal memory technology, arranged in a compact two or three-dimensional architecture. Suitable two-terminal memory technologies can include resistive-switching memory, conductive-bridging memory, phase-change memory, organic memory, magneto-resistive memory, or the like, or a suitable combination of the foregoing. In a further embodiment, the two-terminal memory technology can be a two-terminal resistive switching technology.

A column controller 1206 and sense amps 1208 can be formed adjacent to memory array 1202. Moreover, column controller 1206 can be configured to activate (or identify for activation) a subset of bit lines of memory array 1202. Column controller 1206 can utilize a control signal(s) provided by a reference and control signal generator(s) 1218 to activate, as well as operate upon, respective ones of the subset of bitlines, applying suitable program, erase or read voltages to those bitlines. Non-activated bitlines can be kept at an inhibit voltage (also applied by reference and control signal generator(s) 1218), to mitigate or avoid bit-disturb effects on these non-activated bitlines.

In addition, operating and control environment 1200 can comprise a row controller 1204. Row controller 1204 can be formed adjacent to and electrically connected with word lines of memory array 1202. Also utilizing control signals of reference and control signal generator(s) 1218, row controller 1204 can select one or more rows of memory cells with a suitable selection voltage. Moreover, row controller 1204 can facilitate program, erase or read operations by applying suitable voltages at selected word lines.

Sense amps 1208 can read data from, or write data to, the activated memory cells of memory array 1202, which are selected by column control 1206 and row control 1204. Data read out from memory array 1202 can be provided to an input/output buffer 1212. Likewise, data to be written to memory array 1202 can be received from the input/output buffer 1212 and written to the activated memory cells of memory array 1202.

A clock source(s) 1210 can provide respective clock pulses to facilitate timing for read, write, and program operations of row controller 1204 and column controller 1206. Clock source(s) 1210 can further facilitate selection of word lines or bit lines in response to external or internal commands received by operating and control environment 1200. Input/output buffer 1212 can comprise a command and address input, as well as a bidirectional data input and output. Instructions are provided over the command and address input, and the data to be written to memory array 1202 as well as data read from memory array 1202 is conveyed on the bidirectional data input and output, facilitating connection to an external host apparatus, such as a computer or other processing device (not depicted, but see *e.g*., computer 1302 of Figure 13, *infra*).

Input/output buffer 1212 can be configured to receive write data, receive an erase instruction, receive a status or maintenance instruction, output readout data, output status information, and receive address data and command data, as well as address data for respective instructions. Address data can be transferred to row controller 1204 and column controller 1206 by an address register 1214. In addition, input data is transmitted to memory array 1202 *via* signal input lines between sense amps 1208 and input/output buffer 1212, and output data is received from memory array 1202 *via* signal output lines from sense amps 1208 to input/output buffer 1212. Input data can be received from the host apparatus, and output data can be delivered to the host apparatus *via* the I/O bus.

Commands received from the host apparatus can be provided to a command interface 1216. Command interface 1216 can be configured to receive external control signals from the host apparatus and determine whether data input to the input/output buffer 1212 is write data, a command, or an address. Input commands can be transferred to a state machine 1220.

State machine 1220 can be configured to manage programming and reprogramming of memory array 1202 (as well as other memory banks of a multi-bank memory array). Instructions provided to state machine 1220 are implemented according to control logic configurations, enabling state machine 1220 to manage read, write, erase, data input, data output, and other functionality associated with memory cell array 1202. In some aspects, state machine 1220 can send and receive acknowledgments and negative acknowledgments regarding successful receipt or execution of various commands. In further embodiments, state machine 1220 can decode and implement status-related commands, decode and implement configuration commands, and so on.

To implement read, write, erase, input, output, *etc.*, functionality, state machine 1220 can control clock source(s) 1210 or reference and control signal generator(s) 1218. Control of clock source(s) 1210 can cause output pulses configured to facilitate row controller 1204 and column controller 1206 implementing the particular functionality. Output pulses can be transferred to selected bit lines by column controller 1206, for instance, or word lines by row controller 1204, for instance.

In connection with Figure 13, the systems, devices, and/or processes described herein can be embodied within hardware, such as a single integrated circuit (IC) chip, multiple ICs, an application specific integrated circuit (ASIC), a computing device or devices, a server device or array of server devices such as implemented in a networked server (or cloud) service, or the like. Further, the order in which some or all of the process blocks appear in each process should not be deemed limiting. Rather, it should be understood that some of the process blocks can be executed in a variety of orders, not all of which may be explicitly illustrated herein.

With reference to Figure 13, a suitable environment 1300 for implementing various aspects of the claimed subject matter includes a computer 1302. Computer 1302 includes a processing unit 1304, a system memory 1310, a codec 1314, and a system bus 1308. The system bus 1308 couples system components including, but not limited to, the system memory 1310 to the processing unit 1304. The processing unit 1304 can be any of various available processors. Dual microprocessors and other multiprocessor architectures also can be employed as the processing unit 1304.

The system bus 1308 can be any of several types of bus structure(s) including the memory bus or memory controller, a peripheral bus or external bus, or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), Small Computer Systems Interface (SCSI), Compute eXpress Link (CXL), high speed Serial Peripheral Interface (SPI) interfaces (*e.g*., HyperFlash, and so forth), Inter-Integrated Circuit (I²C) communication protocol, I³C protocol, *etc.*

The system memory 1310 includes volatile memory 1310A and non-volatile memory 1310B. The basic input/output system (BIOS), containing the basic routines to transfer information between elements within the computer 1302, such as during start-up, is stored in non-volatile memory 1310B. In addition, according to present innovations, codec 1314 may include at least one of an encoder or decoder, wherein the at least one of an encoder or decoder may consist of hardware, software, or a combination of hardware and software. Although codec 1314 is depicted as a separate component, codec 1314 may be contained within non-volatile memory 1310B. By way of illustration, and not limitation, non-volatile memory 1310B can include read only memory (ROM), programmable ROM (PROM), electrically programmable ROM (EPROM), electrically erasable programmable ROM (EEPROM), or flash memory, two-terminal memory, and so on. Volatile memory 1310A includes random access memory (RAM), and in some embodiments can embody a cache memory. By way of illustration and not limitation, RAM is available in many forms such as static RAM (SRAM), dynamic RAM (DRAM), synchronous DRAM (SDRAM), double data rate SDRAM (DDR SDRAM), and enhanced SDRAM (ESDRAM).

Computer 1302 may also include removable/non-removable, volatile/non-volatile computer storage medium. Figure 13 illustrates, for example, disk storage 1306. Disk storage 1306 includes, but is not limited to, devices like a magnetic disk drive, solid state disk (SSD) floppy disk drive, tape drive, Jaz drive, Zip drive, LS-100 drive, flash memory card, or memory stick. In addition, disk storage 1306 can include storage medium separately or in combination with other storage medium including, but not limited to, an optical disk drive such as a compact disk ROM device (CD-ROM), CD recordable drive (CD-R Drive), CD rewritable drive (CD-RW Drive), a digital versatile disk ROM drive (DVD-ROM), a Blu-Ray Disc^{®}, and so forth. To facilitate connection of the disk storage devices 1306 to the system bus 1308, a removable or non-removable interface is typically used, such as storage interface 1312. It is appreciated that storage devices 1306 can store information related to a user. Such information might be stored at or provided to a server or to an application running on a user device. In one embodiment, the user can be notified (*e.g.*, by way of output device(s) 1332) of the types of information that are stored to disk storage 1306 or transmitted to the server or application. The user can be provided the opportunity to opt-in or opt-out of having such information collected and/or shared with the server or application (*e.g*., by way of input from input device(s) 1342).

It is to be appreciated that Figure 13 describes software that acts as an intermediary between users and the basic computer resources described in the suitable operating environment 1300. Such software includes an operating system 1306A. Operating system 1306A, which can be stored on disk storage 1306, acts to control and allocate resources of the computer system 1302. Applications 1306C take advantage of the management of resources by operating system 1306A through program modules 1306D, and program data 1306D, such as the boot/shutdown transaction table and the like, stored either in system memory 1310 or on disk storage 1306. It is to be appreciated that the claimed subject matter can be implemented with various operating systems or combinations of operating systems.

A user enters commands or information into the computer 1302 through input device(s) 1342. Input devices 1342 include, but are not limited to, a pointing device such as a mouse, trackball, stylus, touch pad, keyboard, keypad, touch screen, microphone, joystick, game pad, satellite dish, scanner, TV tuner card, digital camera, digital video camera, web camera, and the like. These and other input devices connect to the processing unit 1304 through the system bus 1308 *via* input port(s) 1340. Input port(s) 1340 include, for example, a serial port, a parallel port, a game port, and a universal serial bus (USB). Output device(s) 1332 uses some of the same type of ports as input device(s) 1342. Thus, for example, a USB port may be used to provide input to computer 1302 and to output information from computer 1302 to an output device 1332. Output adapter 1330 is provided to illustrate that there are some output devices 1332 like monitors, speakers, and printers, among other output devices 1332, which require special adapters. The output adapters 1330 include, by way of illustration and not limitation, video and sound cards that provide a means of connection between the output device 1332 and the system bus 1308. It should be noted that other devices and/or systems of devices provide both input and output capabilities such as remote computer(s) 1338.

Computer 1302 can operate in a networked environment using logical connections to one or more remote computers, such as remote computer(s) 1324. The remote computer(s) 1324 can be a personal computer, a server, a router, a network PC, a workstation, a microprocessor based appliance, a peer device, a smart phone, a tablet, or other network node, and typically includes many of the elements described relative to computer 1302. For purposes of brevity, only a memory storage device 1326 is illustrated with remote computer(s) 1324. Remote computer(s) 1324 is logically connected to computer 1302 through a network 1322 and then connected *via* communication interface(s) 1320. Network 1322 encompasses wire or wireless communication networks such as local-area networks (LAN) and wide-area networks (WAN) and cellular networks. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication interface(s) 1320 refers to the hardware/software employed to connect the network 1322 to the bus 1308. While communication interface(s) 1320 is shown for illustrative clarity inside computer 1302, it can also be external to computer 1302. The hardware/software necessary for connection to the network 1322 includes, for exemplary purposes only, internal and external technologies such as, modems including regular telephone grade modems, cable modems and DSL modems, ISDN adapters, and wired and wireless Ethernet cards, hubs, and routers.

The illustrated aspects of the disclosure may also be practiced in distributed computing environments where certain tasks are performed by remote processing devices that are linked through a communications network (*e.g*., a multi-party computation (MPC) process or algorithm). In a distributed computing environment, program modules or stored information, instructions, or the like can be located in local or remote memory storage devices.

Moreover, it is to be appreciated that various components described herein can include electrical circuit(s) that can include components and circuitry elements of suitable value in order to implement the embodiments of the subject disclosure. Furthermore, it can be appreciated that many of the various components can be implemented on one or more IC chips. For example, in one embodiment, a set of components can be implemented in a single IC chip. In other embodiments, one or more of respective components are fabricated or implemented on separate IC chips.

In regard to the various functions performed by the above described components, architectures, circuits, processes and the like, the terms (including a reference to a "means") used to describe such components are intended to correspond, unless otherwise indicated, to any component which performs the specified function of the described component (*e.g*., a functional equivalent), even though not structurally equivalent to the disclosed structure, which performs the function in the herein illustrated exemplary aspects of the embodiments. In this regard, it will also be recognized that the embodiments include a system as well as a computer-readable medium having computer-executable instructions for performing the acts and/or events of the various processes.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising".

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. The block diagrams of the architecture and flow charts are grouped for ease of understanding. However, it should be understood that combinations of blocks, additions of new blocks, re-arrangement of blocks, and the like are contemplated in alternative embodiments of the present disclosure.

It is also understood that the examples and embodiments described herein are for illustrative purposes only and that various modifications or changes in light thereof will be suggested to persons skilled in the art and are to be included within the spirit and purview of this application and scope of the appended claims.

## Claims

1. An electronic device, comprising:
a communication interface facilitating communication by way of a network with a remote device;
a second communication interface facilitating communication with a nearby electronic device;
an integrated circuit (IC) device comprising proof of origin (PoO) data unique or substantially unique to the IC device, that is communicatively coupled to the electronic device over the second communication interface;
a processor for executing instructions for trusted access to and communication with a peer-to-peer (P2P) network and providing trusted data services to a blockchain network connected to the P2P network;
the instructions stored in a storage medium or embodied in logic hardware, or in part in the storage medium and in part in the logic hardware, the instructions comprising:
initiate communication with the remote device utilizing the communication interface;
send the PoO data to the remote device;
receive a validation response from the remote device validating the electronic device on the P2P network;
connect to a blockchain network; and
execute a data service application from the P2P network that provides a data service for the blockchain network.

2. The electronic device of claim 1, wherein the data service is an oracle data service that obtains off-chain data, external to the blockchain network, and supplies the off-chain data to the blockchain network in response to an oracle data service request.

3. The electronic device of claim 2, wherein the oracle data service request originates at a node of the blockchain network and is received through the P2P network at the electronic device operating as a node of the P2P network.

4. The electronic device of claim 2, wherein the instructions further comprise:
in response to receiving the validation response and connecting to the blockchain network, connecting to a data source of the off-chain data and responding to the oracle data service request from data retrieved from the data source.

5. The electronic device of claim 4, wherein the data source is external to the blockchain network and is selected from the group consisting essentially of: a transaction ledger of a digital asset, a digital financial account; a financial exchange data server; a commercial exchange data server; a capital market data server; a ledger of a second blockchain; a subscription-limited data server; a publication-limited data server; a computational data server; a node survey data server; and a suitable combination of the foregoing.

6. The electronic device of claim 1, wherein the instructions further comprise:
sending a query for second PoO data from the remote device;
receiving a response to the query, extracting data from the response and validating the data from the response as the second PoO data; and
authenticating the remote device in response to validating the data as the second PoO data.

7. The electronic device of claim 1, further comprising:
a memory storage coupled to the communication interface for storing and updating a data field containing contemporaneous data for the data service, wherein communication interface facilitates read-only access to the data field for a node of the blockchain network to obtain the contemporaneous data for the data service.

8. The electronic device of claim 1, wherein the second communication interface further comprises one of:
a wired communication interface for communicatively coupling the IC device to the electronic device;
a short-range or quasi line-of-sight wireless interface for communicatively coupling the IC device to the electronic device;
a removable device interface for removably receiving a housing of the IC device and for communicatively coupling the IC device to the processor; or
an internal drive bay for receiving the housing of the IC device within a housing of the electronic device and communicatively coupling the IC device with the processor.

9. The electronic device of claim 1, wherein the instructions further comprise a distributed data service application comprising additional instructions, including:
monitor processing resources of the processor, memory resources of a memory and communication resources of the communication interface;
receive a resource modification request from the data service application to increase or decrease processing resources, memory resources or communication resources in response to a change in data service requests to the P2P network from the blockchain network; and
modify the processing resources, memory resources or communication resources of the electronic device consistent with the resource modification request from the data service application.

10. A computing network, comprising:
a first computing device having:
a first network communication interface;
a first integrated circuit (IC) device comprising first proof of origin (PoO) data unique or substantially unique to the first IC device;
a memory storing instructions of a blockchain oracle-service application;
a processor for executing the instructions stored in the memory;
a second computing device having:
a second network communication interface connected directly or indirectly to the first network communication interface of the first computing device forming a peer-to-peer (P2P) network;
a second IC device comprising second PoO data unique or substantially unique to the second IC device; and
a gateway coupled to a node of a blockchain network and serving as an interconnection between the P2P network and the blockchain network; wherein:
the first computing device is configured to receive and validate the second PoO data to validate the second computing device,
the second computing device is configured to receive and validate the first PoO data to validate the first computing device, and
the first computing device executes the blockchain oracle-service application providing off-chain data, which is external to the blockchain, to the node of the blockchain network in response to a query for the off-chain data from the node of the blockchain network.

11. The computing network of claim 10, wherein the second computing device is a source of the off-chain data, and further wherein the first computing device transmits the off-chain data acquired from the second computing device to the blockchain network in response to the query for the off-chain data.

12. The computing network of claim 10, wherein the second computing device is a source of the off-chain data, and further wherein:
the first computing device receives the off-chain data acquired from the second computing device and saves the off-chain data to the memory; and
in connection to the query the first computing device permits access by the node of the blockchain by way of the gateway to the off-chain data stored in the memory.

13. The computing network of claim 10, wherein the blockchain oracle-service application is a distributed blockchain oracle-service application, and wherein:
the second computing device comprises a second memory storing instructions for the distributed blockchain oracle-service application.

14. The computing network of claim 13, wherein the distributed blockchain oracle-service application operates to increase or decrease computing resources of the P2P network to respond to off-chain data requests from the blockchain network, including the query for the off-chain data.

15. The computing network of claim 14, wherein computing resources of the P2P network allocated to the off-chain data requests are increased in response to increasing data requests from the blockchain network and are decreased in response to decreasing data requests from the blockchain network.

16. The computing network of claim 15, wherein increasing or decreasing computing resources of the P2P network includes increasing or decreasing, respectively a number of computing devices within the P2P network executing the distributed blockchain oracle-service application and serving the data requests.

17. The computing network of claim 10, wherein the gateway is embodied by the first computing device or by the second computing device, which is coupled to the node of the blockchain network and serves as the interconnection between the P2P network and the blockchain network.

18. The computing network of claim 10, further comprising a third computing device operating as a node of the P2P network, wherein the gateway is a distributed gateway embodied by two or more of: the first computing device, the second computing device or the third computing device.

19. The computing network of claim 18, wherein computing devices of the distributed gateway further comprise a distributed gateway application configured to monitor traffic between the P2P network and the blockchain network and increase or decrease communication resources in response to an increase or decrease, respectively in the monitored traffic.

20. The computing network of claim 18, wherein the distributed gateway application is configured to increase or decrease the number of computing devices embodying the distributed gateway in conjunction with increasing or decreasing communication resources.
